(19) Europäisches Patentamt
European Patent Office
Office européen des brevets

(11) **EP 2 617 765 B1**

(12) **EUROPEAN PATENT SPECIFICATION**

(45) Date of publication and mention
of the grant of the patent:
**05.11.2014  Bulletin 2014/45**

(51) Int Cl.:
***C08L 23/14*** *(2006.01)*    ***B32B 27/32*** *(2006.01)*
***B65D 65/40*** *(2006.01)*    ***C08F 10/06*** *(2006.01)*
***C08J 5/18*** *(2006.01)*    ***C08L 23/08*** *(2006.01)*
***C08L 23/10*** *(2006.01)*

(21) Application number: **11825237.8**

(22) Date of filing: **15.09.2011**

(86) International application number:
**PCT/JP2011/071106**

(87) International publication number:
**WO 2012/036237 (22.03.2012 Gazette 2012/12)**

(54) **PROPYLENE RESIN SHEET AND HEAT PROCESSING PACKAGING BODY USING SAME**

PROPYLENHARZFOLIE UND VERPACKUNGSKÖRPER ZUR WÄRMEBEHANDLUNG DAMIT

FEUILLE DE RÉSINE DE PROPYLÈNE ET CORPS D'EMBALLAGE DE TRAITEMENT THERMIQUE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2010  JP 2010209035**

(43) Date of publication of application:
**24.07.2013  Bulletin 2013/30**

(73) Proprietor: **Japan Polypropylene Corporation Tokyo 108-0014 (JP)**

(72) Inventors:
• **KADOWAKI Yuji**
**Yokkaichi-shi**
**Mie 510-0848 (JP)**
• **KANAI Gen**
**Yokkaichi-shi**
**Mie 510-0848 (JP)**

(74) Representative: **Hoffmann Eitle**
**Patent- und Rechtsanwälte PartmbB**
**Arabellastraße 30**
**81925 München (DE)**

(56) References cited:
**WO-A1-2010/107003**    **JP-A- 2005 111 874**
**JP-A- 2010 138 211**

**Description**

TECHNICAL FIELD

The present invention relates to a propylene resin sheet and to a heat-treatable packaging material which uses the same. More specifically, the present invention relates both to a propylene resin sheet which, even when subjected to heat treatment under applied pressure such as pressurized steam treatment or pressurized hot-water treatment, has an excellent heat resistant and thus does not readily incur deformation, yet is endowed with a good transparency and flexibility, and also has an excellent impact resistance, particularly at very low temperatures (e.g., -25°C); and also to a heat-treatable packaging material which uses the same.

BACKGROUND ART

The performance characteristics desired in packaging materials for pascalization and in packaging bags that must be disinfected or sterilized under pressurized treatment, such as IV infusion bags for medications and the like, include transparency to allow the contents to be checked, flexibility to enable liquid discharge without forming an air vent, low-temperature impact resistance so that the bag does not rupture even with rough handling during transport in very cold regions (e.g., in a -25°C environment), heat resistance so that deformation and fusion do not occur even when disinfection or sterilization at 121°C is carried out, and fabricability such as heat-sealability to facilitate bag-making.

With regard to IV bags in particular, vinyl chloride resins were formerly used as a material that satisfies the above performance characteristics. However, owing to the bleeding out of plasticizers and waste disposal problems, and also to recent concerns over the global environment, such resins have been replaced with polyolefin resins.

IV bags composed primarily of polyethylene, though endowed with an excellent flexibility and impact resistance, have a poor heat resistance and thus give rise to appearance defects such as deformation at a sterilization temperature of 121°C (overkill conditions), making them incapable of functioning satisfactorily as IV bags (see, for example, Patent Document 1). On the other hand, IV bags composed primarily of polypropylene have a good heat resistance, but are hard as an IV bag material and have an inadequate impact resistance at low temperatures, as a result of which these too are unable to satisfy the above performance characteristics (see, for example, Patent Document 2).

Hence, art has been disclosed in which flexibility and impact resistance are conferred by the addition of an elastomeric component to polypropylene (see, for example, Patent Document 3). However, problems with this approach are that the heat resistance of polypropylene is sacrificed, low-molecular-weight ingredients bleed out following sterilization, and the transparency worsens. Art involving the addition of a styrene-based elastomer as the elastomeric component has also been disclosed (see, for example, Patent Document 4), but blocking tends to arise and the productivity leaves much to be desired. Moreover, styrene-based elastomers are more expensive than olefinic elastomers, leading to cost-related issues as well.

Unrelated to the above, polypropylene block copolymers in which an elastomeric component is added by continuous polymerization using a Ziegler-Natta catalyst have been developed (see, for example, Patent Document 5). Unsurprisingly, however, bleedout arises following sterilization, and the transparency is poor. Water-cooled blown film extruded films composed of a propylene-ethylene block copolymer having an elastomeric component added thereto and obtained by continuous polymerization using a metallocene catalyst have also been disclosed. These films exhibit reduced bleedout under 40°C conditions (see, for example, Patent Document 6), but do not yet have a sufficient low-temperature impact resistance. In addition, films for medical use which contain a heterogeneous blend of resins have been disclosed (see, for example, Patent Document 7), but these too lack an adequate impact resistance at low temperature.

Thus, although there exists a need for low-cost IV bag materials which strike a good balance among the properties of heat resistance, transparency, flexibility and impact resistance, materials satisfying such a need have not previously been found.

Moreover, the IV bag-making process includes the steps of welding injection-molded parts such as a spout, a discharge port and an injection port to the bag, which requires melting of the film to allow sufficient fusion to take place. For this purpose, heat sealing is carried out under very harsh conditions (e.g., high temperature, high pressure, long duration). In a fully melted state, the molten resin ends up sticking to the sealing bar, inevitably worsening productivity. To address this problem, technology has been disclosed wherein the outer layer and the inner layer of a laminated film are provided with different melting points, enabling the inner layer to be melted while the outer layer remains solid (see, for example, Patent Document 7). The inner layer is made of a polyethylene resin and can thus withstand a sterilization temperature of 115°C; however, with 121°C sterilization, the inner faces of the film end up fusing to each other ("internal fusion"). Hence, the heat resistance is inadequate.

In addition, Patent Document 8 discloses a sheet having an excellent transparency, flexibility, heat resistance and impact resistance (falling body impact). However, such a sheet has an inadequate resistance to impact at very low temperatures (e.g., -25°C), as a result of which failure of the sheet during transport in cold regions is a concern.

CITATION LIST

PATENT LITERATURE

Patent Document 1: Japanese Patent Application Laid-open No. H9-308682
Patent Document 2: Japanese Patent Application Laid-open No. H9-99036
Patent Document 3: Japanese Patent Application Laid-open No. H9-75444
Patent Document 4: Japanese Patent Application Laid-open No. H9-324022
Patent Document 5: Japanese Patent Application Laid-open No. 2006-307072
Patent Document 6: Japanese Translation of PCT Application No. 2008-524391
Patent Document 7: Japanese Patent Application Laid-open No. 2007-245490
Patent Document 8: Japanese Patent Application Laid-open No. 2010-138211

SUMMARY OF INVENTION

TECHNICAL PROBLEM

To provide a good balance of the performance characteristics such as transparency, heat resistance and flexibility required of heat-treatable packaging bags, it is effective to use a combination of a propylene-$\alpha$-olefin random copolymer which exhibits heat resistance with a propylene-$\alpha$-olefin random copolymer to which has been added a specific amount of $\alpha$-olefin that is capable of increasing flexibility without a loss of transparency. However, in this state, the packaging material is unable to withstand harsh heat-sealing conditions and the thickness of the heat-sealed areas decreases to be thin. As a result, if a heat-treatable packaging material in the form of a bag that has been filled should be dropped, there is a possibility that cracking will arise from the heat-sealed edges, causing the bag to burst.

Accordingly, the present invention provides both a sheet which has an excellent flexibility, transparency and heat resistance, can withstand harsh heat-sealing conditions during bag-making, and has an excellent impact resistance, particularly at very low temperatures (e.g., -25°C); and also provides a heat-treatable packaging material which uses the same.

SOLUTION TO PROBLEM

The inventors have conducted various investigations and analyses with the aim of arriving at a solution to the above problems. As a result, they have discovered that these problems can be satisfactorily resolved by blending a specific amount of a mixture of specific propylene-$\alpha$-olefin copolymers and an ethylene-$\alpha$-olefin copolymer component having a specific density and melt flow rate. The inventors ultimately arrived at the present invention upon learning that the above resin formulations and layer structure enable a sheet which resolves the above challenges to be obtained.

That is, in a first aspect, the invention provides a propylene resin sheet having at least one layer made of a propylene resin composition (X) composed of:

50 to 90 wt % of a propylene resin composition (A) which satisfies conditions under which

(A-i) 30 to 70 wt% of a propylene-$\alpha$-olefin random copolymer component (A1) having a melting peak temperature (Tm (A1)) of from 120 to 150°C, and 70 to 30 wt% of a propylene-$\alpha$-olefin random copolymer component (A2) having a $C_2$ and/or $C_{4\text{-}8}$ $\alpha$-olefin content ($\alpha$[A2]) of at least 10 wt% but less than 20 wt% are contained,
(A-ii) a melt flow rate (MFR (A), at 230°C and 2.16 kg) is in the range of from 0.5 to 20 g/10 min,
(A-iii) in a temperature-loss tangent (tan $\delta$, measured for a 200 $\mu$m thick sheet obtained by water-cooled blown-film extrusion) curve obtained by dynamic mechanical analysis (DMA), the tan $\delta$ curve peaks representing glass transitions observed in the range of -60°C to 20°C exhibit a single peak at or below 0°C, and
(A-iv) in a temperature-loss tangent (tan $\delta$, measured for a 2 mm thick sheet obtained by press molding) curve obtained by dynamic mechanical analysis (DMA), the tan $\delta$ curve peak representing glass transitions observed in the range of -60°C to 20°C exhibit a non-single peak at or below 0°C; and

10 to 50 wt % of an ethylene-$\alpha$-olefin copolymer (B) which satisfies conditions under which

(B-i) a density is in the range of from 0.860 to 0.910 g/cm$^3$, and
(B-ii) a melt flow rate (MFR (B), at 190°C and 2.16 kg) is from 0.1 to 20 g/10 min.

In a second aspect of the invention, the propylene resin sheet according to the first aspect of the invention is a sheet composed of at least two layers including, as an inner layer (1), the layer composed of the propylene resin composition (X) according to claim 1, and further including an outer layer (2),
wherein when a total thickness of the sheet is defined as 100, the inner layer (1) accounts for 50 to 98 of the total thickness.

In a third aspect of the invention, the propylene resin sheet according to the first or second aspect of the invention is characterized in that the propylene resin composition (A) is obtained using a metallocene catalyst.

In a fourth aspect, the invention provides the propylene resin sheet according to any one of the first to third aspects of the invention, wherein the propylene-$\alpha$-olefin random copolymer component (A1) and the propylene-$\alpha$-olefin random copolymer component (A2) of the propylene resin composition (A) are obtained by successive polymerization including, in order:

a first step of polymerizing from 30 to 70 wt% of the propylene-$\alpha$-olefin random copolymer component (A1), and a second step of polymerizing from 70 to 30 wt% of the propylene-$\alpha$-olefin random copolymer component (A2) having an $\alpha$-olefin content ($\alpha$ [A2]) of at least 10 wt% but less than 20 wt%.

In a fifth aspect, the invention provides the propylene resin sheet according to any one of the first to third aspects of the invention, wherein the propylene-$\alpha$-olefin random copolymer component (A1) and the propylene-$\alpha$-olefin random copolymer component (A2) of the propylene resin composition (A) are obtained by successive polymerization including, in order:

a fist step of polymerizing from 30 to 70 wt% of the propylene-$\alpha$-olefin random copolymer component (A1), and a second step of polymerizing from 70 to 30 wt% of the propylene-$\alpha$-olefin random copolymer component (A2) having an $\alpha$-olefin content ($\alpha$[A2]) of at least 13 wt% but less than 16 wt%.

In a sixth aspect of the invention, the propylene resin sheet according to any one of the first to fifth aspects of the invention is characterized in that the propylene resin composition (X) making up an inner layer (1) further includes, per 100 parts by weight of the propylene resin composition (X):

from 1 to 100 parts by weight of a propylene resin (C) which satisfies the conditions of

(C-i) having a melting peak temperature (Tm (C)) of more than 150°C and up to 170°C, and
(C-ii) having a melt flow rate (MFR (C), at 230°C and 2.16 kg) in the range of from 0.5 to 30 g/10 min.

In a seventh aspect, the invention provides the multilayer polypropylene resin sheet according to any one of the first to sixth aspect of the invention which further includes an innermost layer (3), with the polypropylene resin sheet being formed of at least three layers in the order: outer layer (2), inner layer (1), innermost layer (3).

In an eighth aspect of the invention, the propylene resin sheet according to any one of the first to seventh aspects of the invention is characterized in that the propylene resin composition (Y) making up an outer layer (2) includes a propylene resin (D) having a melting peak temperature (Tm (D)) in the range of 150 to 170°C.

In a nineth aspect, the invention provides the polypropylene resin sheet according to any one of the first to eighth aspect of the invention, wherein the propylene-$\alpha$-olefin random copolymer (A2) in the propylene resin composition (A) is a propylene-ethylene random copolymer.

In a tenth aspect, the invention provides the polypropylene resin sheet according to any one of the first to ninth aspect of the invention, wherein the propylene-$\alpha$-olefin random copolymer (A1) in the propylene resin composition (A) is a propylene-ethylene random copolymer.

In an eleventh aspect of the invention, the propylene resin sheet according to any one of the first to tenth aspects of the invention is characterized by having a thickness of from 0.01 mm to 1.0 mm.

In a twelfth aspect, the invention provides a heat-treatable packaging material which uses the multilayer propylene resin sheet according to any one of the first to eleventh aspects of the invention.

In a thirteenth aspect, the invention provides the heat-treatable packaging material according to the twelfth aspect of the invention which is an IV infusion bag.

ADVANTAGEOUS EFFECTS OF INVENTION

A basic feature of both the sheet of the invention and of the inventive heat-treatable packaging material using the same is the use in at least one layer of: a propylene resin composition (X) containing a specific propylene resin composition (A), and a specific ethylene-α-olefin copolymer (B).

Because the propylene resin composition (A) used in the propylene resin composition (X) contains a propylene-α-olefin random copolymer component (A1) having a melting peak temperature in a specific range and a propylene-α-olefin random copolymer component (A2) having a specific α-olefin content, it has a high heat resistance, transparency and flexibility, an excellent low-temperature impact resistance, and is able to confer the resulting sheet with a good balance of flexibility and low-temperature impact resistance.

Moreover, the ethylene-α-olefin copolymer (B) used in the propylene resin composition (X) is characterized in terms of its density and melt flow rate, and is capable of conferring flexibility to the resulting sheet without a loss of transparency and low-temperature impact resistance.

Therefore, the propylene resin sheet of the invention and the inventive heat-treatable packaging material obtained using such a sheet have an excellent transparency, flexibility and very-low-temperature impact resistance. This combination of properties make them highly suitable for use as packaging materials for pascalization and as IV infusion bags.

BRIEF DESCRIPTION OF DRAWINGS

FIG. 1 is a graph showing the temperature - loss tangent (tan δ) curve obtained by dynamic mechanical analysis (DMA) for the water-cooled blown-film extruded sheet of propylene resin composition (A-4) obtained in Production Example (A-4), and illustrates an example having a single peak.
FIG. 2 is a graph showing the temperature - loss tangent (tan δ) curve obtained by dynamic mechanical analysis (DMA) for the press-molded sheet of propylene resin composition (A-6) obtained in Production Example (A-6), and illustrates an example having a non-single peak.
FIG. 3 is a graph showing the temperature - loss tangent (tan δ) curve obtained by dynamic mechanical analysis (DMA) for the press-molded sheet of propylene resin composition (A-4) obtained in Production Example (A-4), and illustrates an example having a broad, non-single, peak.

DESCRIPTION OF EMBODIMENTS

The propylene resin sheet of the invention is a sheet in at least one layer of which a propylene resin composition (X) is used. The invention also provides a heat-treatable packaging material obtained using such a sheet.

The components making up the respective layers of the propylene resin sheet of the invention, the production of the components in each layer, and the heat-treatable packaging material are described below in detail.

[I] Components Making up the Respective Layers of the Propylene Resin Sheet

1. Main Layer (1) (when laminated with an outer layer (2) and the like, this layer is subsequently referred as "inner layer (1)")

The main layer (1) is formed of a propylene resin composition (X) which includes the propylene resin composition (A) and the ethylene-α-olefin copolymer (B) described below.

(1) Propylene Resin Composition (A)

Properties of Propylene Resin Composition (A)

The propylene resin composition (A) (also referred to below as "component (A)") which is used as a component of the propylene resin composition (X) making up the main layer (1) of the propylene resin sheet of the invention is required to have a high transparency, a high flexibility and a high impact resistance. In order to fulfill these requirements at a high level, it is critical that component (A) satisfy conditions (A-i) to (A-iv) below.

Basic Conditions of Component (A)

Component (A) is a propylene resin composition (A) which satisfies the following conditions (A-i) to (A-iv):

(A-i) includes from 30 to 70 wt% of a propylene-α-olefin random copolymer component (A1) having a melting peak temperature (Tm (A1)) of from 120 to 150°C, and from 70 to 30 wt% of a propylene-α-olefin random copolymer component (A2) having a $C_2$ or $C_{4-8}$ $\alpha$-olefin content ($\alpha$ [A2]) of at least 10 wt% but less than 20 wt%, and

(A-ii) having a melt flow rate (MFR (A), at 230°C and 2.16 kg) in the range of from 0.5 to 20 g/10 min,

(A-iii) in a temperature - loss tangent (tan $\delta$, measured for a 200 $\mu$m thick sheet obtained by water-cooled blown-film extrusion) curve obtained by dynamic mechanical analysis (DMA), the tan $\delta$ curve peaks representing glass transitions observed in the range of -60 to 20°C exhibit a single peak at or below 0°C, and

(A-iv) in a temperature - loss tangent (tan $\delta$, measured for a 2 mm thick sheet obtained by press molding) curve obtained by dynamic mechanical analysis (DMA), the tan $\delta$ curve peaks representing glass transitions observed in the range of -60 to 20°C exhibit a non-single peak at or below 0°C.

The above conditions are described more fully in (i) to (vii) below.

(i) Melting Peak Temperature (Tm (A1)) of Propylene-$\alpha$-Olefin Random Copolymer Component (A1)

Component (A1) is a component which determines the crystallinity in the propylene resin composition (component (A)). To improve the heat resistance of component (A), it is necessary for the melting peak temperature Tm (A1) (also referred to below as "Tm (A1)") of component (A1) to be high. However, if Tm (A1) is too high, this adversely affects the flexibility and transparency. On the other hand, if Tm (A1) is too low, the heat resistance worsens, as a result of which thinning of the sheet may proceed during heat sealing. Tm (A1) must be in the range of from 120 to 150°C, and is preferably from 125 to 145°C, and more preferably from 125 to 140°C.

It is preferable for component (A1) to be prepared using a metallocene catalyst.

Here, the melting peak temperature Tm is a value determined with a differential scanning calorimeter (DSC, available from Seiko Instruments, Inc.). Specifically, it is the value determined as the melting peak temperature when a 5.0 mg sample that has been collected and held at 200°C for 5 minutes is subsequently crystallized by lowering the temperature to 40°C at a ramp-down rate of 10°C/min, then melted at a ramp-up rate of 10°C/min.

(ii) Ratio of Component (A1) in Component (A)

Although component (A1) confers heat resistance to component (A), if the ratio W(A1) of component (A1) in component (A) is too high, sufficient flexibility, sufficient impact resistance and sufficient transparency cannot be achieved. Hence, it is essential for the ratio of component (A1) to be 70 wt% or less.

On the other hand, if the ratio of component (A1) is too low, even when Tm (A1) is sufficient, the heat resistance is inadequate, as a result of which deformation may occur in a disinfection or sterilization step. Hence, the ratio of component (A1) must be at least 30 wt%. The preferred range in W(A1) is from 35 to 65 wt%.

(iii) $\alpha$-Olefin Content $\alpha$[A2] in Propylene-$\alpha$-Olefin Random Copolymer Component (A2)

Component (A2) is a component required for increasing the flexibility, impact resistance and transparency of component (A), and is preferably obtained using a metallocene catalyst. Generally, in a propylene-$\alpha$-olefin random copolymer, as the $\alpha$-olefin content rises, the crystallinity falls and the flexibility-improving effect becomes larger. It is thus critical for the $\alpha$-olefin content in component (A2) (referred to below as "$\alpha$[A2]") to be at least 10 wt%. At $\alpha$[A2] below 10 wt%, a sufficient flexibility may not be achieved. The $\alpha$[A2] content is preferably at least 12 wt%, and more preferably at least 13 wt%.

On the other hand, if $\alpha$[A2] is increased excessively in order to lower the crystallinity of component (A2), the compatibility of component (A1) and component (A2) decreases, as a result of which component (A2) fails to mix intimately with component (A1) and forms domains. In such a phase-separated structure, the refractive indices of the matrix and the domain differ, leading to sharp decline in transparency. Hence, the ratio $\alpha$[A2] of component (A2) in component (A) used in the invention must be less than 20 wt%, and is preferably less than 17 wt%, and more preferably less than 16 wt%.

The $\alpha$-olefin used as the comonomer in component (A1) and component (A2) is preferably selected from among $C_2$ $\alpha$-olefins and $C_{4-20}$ $\alpha$-olefins, examples of which include $\alpha$-olefins other than propylene, such as ethylene, 1-butene, 1-pentene, 1-hexene, 3-methyl-1-butene and 4-methyl-1-pentene; and vinyl compounds such as styrene, vinylcyclopentene, vinylcyclohexane and vinylnorbornane. Two or more such comonomers may be copolymerized. The comonomer is preferably ethylene and/or 1-butene, and most preferably ethylene.

(iv) Ratio of Component (A2) in Component (A)

If the ratio W(A2) of component (A2) in component (A) is too high, the heat resistance will decrease. Hence, it is critical for W(A2) to be held to not more than 70 wt%.

On the other hand, if W(A2) is too low, flexibility and impact resistance-improving effects cannot be obtained.

Hence, it is critical for W(A2) to be at least 30 wt%. The preferred range for W(A2) is from 65 to 35 wt%.

Here, W(A1) and W(A2) are values determined by temperature rising elution fractionation (TREF), and the $\alpha$-olefin contents $\alpha$[A1] and $\alpha$[A2] are values obtained by nuclear magnetic resonance (NMR).

The following methods are used.

Specification of W(A1) and W(A2) by Temperature Rising Elution Fractionation (TREF)

Techniques for evaluating the distribution in the crystallinity of, for example, propylene-$\alpha$-olefin random copolymers by the temperature rising elution fractionation (TREF) are familiar to those skilled in the art. For example, detailed measurement methods are described in the following documents.

G. Glockner: J. Appl. Polym. Sci.: Appl. Polym, Symp., 45, 1-24 (1990)
L. Wild: Adv. Polym. Sci., 98, 1-47 (1990)
J.B.P. Soares, A.E. Hamielec: Polymer, 36, 8, 1639-1654 (1995)

In component (A) used in the invention, there is a large difference between the respective crystallinities of component (A1) and component (A2). Moreover, when both components are produced using metallocene catalysts, the respective crystallinity distributions become narrow, so that intermediate components therebetween become very scarce, enabling both to be precisely fractionated using TREF.

In the invention, TREF measurement is carried out specifically as follows.

A sample is dissolved in o-dichlorobenzene (containing 0.5 mg/mL of BHT) at 140°C to form a solution. The solution is introduced into a 140°C TREF column, following which it is cooled to 100°C at a ramp-down rate of 8°C/min, then cooled to -15°C at a ramp-down rate of 4°C/min, and held for 60 minutes. Next, -15°C o-dichlorobenzene (containing 0.5 mg/mL of BHT) solvent is poured into the column at a rate of 1 mL/min, and the component dissolved in the -15°C o-dichlorobenzene within the TREF column is eluted for 10 minutes, following which the temperature of the column is raised linearly to 140°C at a ramp-up rate of 100°C/hour, thereby giving an elution curve.

In the resulting elution curve, component (A1) and component (A2), due to the difference in crystallinity therebetween, exhibit elution peaks at the respective temperatures T(A1) and T(A2). Because this difference is sufficiently large, substantial separation is possible at an intermediate temperature T(A3) (= {T(A1) + T(A2)}/2).

Here, defining the cumulative amount of component eluted up to T(A3) as W(A2) wt% and the cumulative amount of component eluted at T(A3) and above as W(A1) wt%, W(A2) corresponds to the amount of component (A2) and the cumulative amount W(A1) of component eluted at T(A3) and above corresponds to the amount of component (A1) having a relatively high crystallinity.

The equipment and specifications used in measurement are shown below.

TREF Apparatus

TREF column: 4.3 mm diameter x 150 mm stainless steel column Column packing: 100 $\mu$m surface-deactivated glass beads Heating method: aluminum heating block
Cooling method: Peltier element (water cooling was used to cool the Peltier element)
Temperature distribution: $\pm$0.5°C
Temperature regulator: KP 1000 (Chino Corporation) programmable digital temperature controller (valve open)
Heating system: air bath oven
Temperature at time of measurement: 140°C
Temperature distribution: $\pm$1°C
Valves: 6-way valve, 4-way valve

Sample Injection Apparatus

Injection method: loop injection method
Injection amount: loop size, 0.1 mL
Injection port heating method: aluminum heating block
Temperature at time of measurement: 140°C

Detector

Detector: MIRAN 1A (Foxboro) fixed wavelength type infrared detector
Detection wavelength: 3.42 $\mu$m
High-temperature flow cell: LC-IR microcell; optical path length, 1.5 mm; window shape, 2 diameter x4 mm oval; synthetic sapphire window
Temperature at time of measurement: 140°C

Pump

Delivery pump: SSC-3461 pump (Senshu Kagaku)

Measurement Conditions

Solvent: o-dichlorobenzene (containing 0.5 mg/mL of BHT) Sample concentration: 5 mg/mL
Sample injection amount: 0.1 mL
Solvent flow rate: 1 mL/min

Specification of $\alpha$[A1] and $\alpha$[A2]

To determine the $\alpha$-olefin (preferably ethylene) contents $\alpha$[A1] and $\alpha$[A2] of the respective components, the components are separated by temperature rising column fractionation using a preparative fractionation unit, and $\alpha$-olefin (or ethylene) contents of the respective components are determined by NMR.
Temperature rising column fractionation refers to a measurement method like that described in, for example, Macromolecules 21, 314-319 (1988).
The following method was used in this invention.

Temperature Rising Column Fractionation

A cylindrical column having a diameter of 50 mm and a height of 500 mm is filled with a glass bead carrier (80 to 100 mesh) and held at 140°C. Next, 200 mL of an o-dichlorobenzene solution (10 mg/mL) of the sample dissolved at 140°C is introduced into the column. The column temperature is then cooled to 0°C at a ramp-down rate of 10°C/hour. After being held at 0°C for 1 hour, the column temperature is elevated at a ramp-up rate of 10°C/hour to T(A3) (obtained in TREF measurement) and held at that temperature for 1 hour. The column temperature control precision throughout the series of operations is set to $\pm$1°C.
Next, with the column temperature held at T(A3), the component present within the column and soluble at T(A3) is eluted and recovered by passing through 800 mL of o-dichlorobenzene at T(A3) at a flow rate of 20 mL/min.
Next, the column temperature is raised to 140°C at a ramp-up rate of 10°C/min and the column is left at rest for 1 hour at 140°C, following which the component insoluble at T(A3) is eluted and recovered by passing through 800 mL of the 140°C solvent o-dichlorobenzene at a flow rate of 20 mL/min.
The polymer-containing solution obtained by fractionation is concentrated to 20 mL using an evaporator, then precipitated out in a five-fold amount of methanol. The precipitated polymer is recovered by filtration and dried overnight in a vacuum desiccator.

Measurement of Ethylene Content by $^{13}$C-NMR

The $\alpha$-olefin (preferably ethylene) contents $\alpha$[A2] of each of the components obtained in the above fractionation were determined by analyzing the $^{13}$C-NMR spectrum measured under the following conditions by complete proton decoupling.

Apparatus: GSX-400 (JEOL) or comparable unit
(carbon nuclear resonance frequency, 100 MHz or more)

Solvents: o-dichlorobenzene/heavy benzene = 4/1 (v/v)
Concentration: 100 mg/mL
Temperature: 130°C
Pulse angle: 90°
Pulse interval: 15 seconds
Number of integrations: at least 5000 times

Spectral assignments may be carried out by referring to, for example, Macromolecules 17, 1950 (1984). The spectral assignments measured according to the above conditions are shown in Table 1. Symbols such as $S_{\alpha\alpha}$ in the table are in accordance with the method of notation by Carman et al. (Macromolecules 10, 536 (1977)). In addition, "P" stands for a methyl carbon, "S" stands for a methylene carbon, and "T" stands for a methyne carbon.

Table 1

| Chemical shift (ppm) | Assignment |
| --- | --- |
| 45 to 48 | $S_{\alpha\alpha}$ |
| 37.8 to 37.9 | $S_{\alpha\gamma}$ |
| 37.4 to 37.5 | $S_{\alpha\delta}$ |
| 33.1 | $T_{\delta\delta}$ |
| 30.9 | $T_{\beta\delta}$ |
| 30.6 | $S_{\gamma\gamma}$ |
| 30.2 | $S_{\gamma\delta}$ |
| 29.8 | $S_{\delta\delta}$ |
| 28.7 | $T_{\beta\beta}$ |
| 27.4 to 27.6 | $S_{\beta\delta}$ |
| 24.4 to 24.7 | $S_{\beta\beta}$ |
| 19.1 to 22.0 | P |

Below, letting "P" be a propylene unit in a copolymer chain and letting "E" be an ethylene unit, six types of triads (PPP, PPE, EPE, PEP, PEE and EEE) are capable of being present on the chain. As noted in Macromolecules 15, 1150 (1982), the concentrations of these triads and the spectral peak intensities can be connected by means of the following formulas (1) to (6).

$$[PPP] = k \times I(T_{\beta\beta}) \qquad (1)$$

$$[PPE] = k \times I(T_{\beta\delta}) \qquad (2)$$

$$[EPE] = k \times I(T_{\delta\delta}) \qquad (3)$$

$$[PEP] = k \times I(S_{\beta\beta}) \qquad (4)$$

$$[PEE] = k \times I(S_{\beta\delta}) \qquad (5)$$

$$[EEE] = k \times \{ I(S_{\delta\delta})/2 + I(S_{\gamma\delta})/4 \} \qquad (6)$$

Here, [ ] represents the fraction of the triad. For example, [PPP] represents the fraction of the PPP triad among all the triads.

Therefore, a formula is

$$[PPP] + [PPE] + [EPE] + [PEP] + [PEE] + [EEE] = 1 \quad (7).$$

Also, k is a constant, and I indicates the spectral intensity. For example, $I(T_{\beta\beta})$ stands for the intensity of the peak at 28.7 ppm attributed to $T_{\beta\beta}$.

By using the above formulas (1) to (7), the fractions of each triad are determined, and the ethylene content is determined from the following formula

$$\text{Ethylene content (mol\%)} = ([PEP] + [PEE] + [EEE]) \times 100.$$

The propylene-$\alpha$-olefin random copolymer includes a small amount of propylene heterobonds (2,1-bonds and/or 1,3-bonds), as a result of which the small peaks shown in Table 2 arise.

Table 2

| Chemical shift (ppm) | Assignment |
|---|---|
| 42.0 | $S_{\alpha\alpha}$ |
| 38.2 | $T_{\alpha\gamma}$ |
| 37.1 | $S_{\alpha\delta}$ |
| 34.1 to 35.6 | $S_{\alpha\beta}$ |
| 33.7 | $T_{\gamma\gamma}$ |
| 33.3 | $T_{\gamma\delta}$ |
| 30.8 to 31.2 | $T_{\beta\gamma}$ |
| 30.5 | $T_{\beta\delta}$ |
| 30.3 | $S_{\alpha\beta}$ |
| 27.3 | $S_{\beta\gamma}$ |

In order to determine the correct $\alpha$-olefin (ethylene) content, it is necessary to also take into account and include in the calculations the peaks attributable to such heterobonds, although the complete separation and identification of peaks attributable to heterobonds is difficult. Moreover, because the amount of heterobonds is small, the ethylene content in the invention shall be determined using formulas (1) to (7) in the same manner as the analysis of a copolymer produced with a Ziegler-Natta catalyst and containing substantially no heterobonds.

Conversion of the ethylene content from mol% to wt% is carried out using the following formula.

$$\text{Ethylene content (wt\%)} = (28 \times X/100)/\{28 \times X/100 + 42 \times (1 - X/100)\} \times 100$$

(where X is the ethylene content expressed in mol%).

(v) Method of Preparing Component (A)

A preferred method for preparing component (A) used in the invention involves carrying out successive polymerization using a metallocene catalyst. In a first step, from 30 to 70 wt%, and preferably from 35 to 65 wt%, of the propylene-α-olefin random copolymer component (A1) having a melting peak temperature Tm (A1) in DSC measurement within the range of 120 to 150°C, and preferably from 125 to 140°C, is obtained. In a second step, from 70 to 30 wt%, and preferably from 60 to 35 wt%, of the propylene-α-olefin random copolymer component (A2) having an α-olefin content α[A2] of at least 10 wt% but less than 20 wt%, and preferably from 13 to 16 wt%, is obtained. The specific method employed for the successive polymerization, using a metallocene catalyst, of component (A1) in a first step and component (A2) in a second step may be the method described in, for example, Japanese Patent Application Laid-open No. 2005-132979, the entire contents of which are incorporated herein by reference.

Alternatively, component (A) need not be a successive polymerization product, and may instead be a blend of a propylene-α-olefin copolymer (A1) which satisfies the above melting peak temperature Tm (A1) and a propylene-α-olefin random copolymer (A2) which satisfies the α-olefin content α[A2].

(A-ii) Melt Flow Rate of Component (A) (MFR (A))

The melt flow rate MFR (at 230°C and 2.16 kg) of component (A) used in the invention (which melt flow rate is also referred to below as "MFR (A)") must fall within the range of 0.5 to 20 g/10 min.

MFR (A) may be determined by the ratio of the respective MFRs for component (A1) and component (A2) (also referred to below as "MFR (A1)" and "MFR (A2)"), although in this invention, so long as MFR (A) is in the range of 0.5 to 20 g/10 min, MFR (A1) and MFR (A2) may be any values within ranges that do not compromise the objects of the invention. However, because there is a risk of appearance defects arising in cases where the MFR difference between the two is very large, it is desirable for both MFR (A1) and MFR (A2) to be within the range of 4 to 10 g/10 min.

If MFR (A) is too low, resistance to turning of the extruder screw becomes large, which not only increases the motor load and the forward end pressure, but also roughens the sheet surface, worsening the appearance. As a result, MFR (A) is preferably at least 4 g/10 min, and more preferably at least 5 g /10 min.

On the other hand, if the MFR (A) is too high, sheet formation tends to become unstable, making a uniform sheet difficult to obtain. Therefore, the MFR is preferably not more than 10 g/10 min, and more preferably not more than 8 g/10 min.

Here, MFR is a value measured in general accordance with JIS K7210.

In the case of successive polymerization, adjustment of the melt flow rate (MFR) can be easily carried out by adjusting the temperature and pressure serving as polymerization conditions, or by regulating the amount of hydrogenation that occurs via the addition of a chain transfer agent such as hydrogen during polymerization.

(A-iii) Peak in Temperature - Loss Tangent (tan δ) Curve Obtained by Dynamic Mechanical Analysis (DMA) on a 200 μm Thick Sheet Formed by Water-Cooled Blown-Film Extrusion

The propylene resin composition (component (A)) used in the invention must satisfy the condition that, in a temperature - loss tangent (tan δ) curve obtained by dynamic mechanical analysis (DMA) on a 200 μm thick sheet formed by water-cooled blown-film extrusion, the tan 5 curve peaks representing glass transitions observed in the range of -60 to 20°C exhibit a single peak at or below 0°C.

In cases where component (A) assumes a phase-separated structure, because the glass transition temperature of the non-crystalline portions included in component (A1) and the glass transition temperature of the non-crystalline portions included in component (A2) each differ, there ceases to be only a single peak. In such a case, the transparency tends to worsen.

Moreover, depending on the apparatus used for measurement and the flexibility of the sample, the detection of stress in a 200 μm thick sheet may be inadequate, as a result of which measurement may be difficult. In such a case, measurement may be carried out on a plurality of sheets layered together, such as two layered sheets; similar results can be obtained by measurement in this way.

Here, dynamic mechanical analysis (DMA) is carried out by imparting sinusoidal strain of a specific frequency to a strip-shaped test specimen, and detecting the stress that arises. A frequency of 1 Hz is used. The measurement temperature is raised in a stepwise fashion from -60°C, and the test is carried out until the sample melts and measurement becomes impossible. It is recommended that the size of the strain be from about 0.1 to about 0.5%. The storage modulus G' and the loss modulus G" are determined by known methods from the resulting stress, and the loss tangent (= loss modulus/storage modulus) defined by this ratio is plotted versus temperature, yielding a sharp peak in the temperature region at or below 0°C. Generally, a peak in the tan 5 curve at or below 0°C is observed with the glass transition of non-crystalline regions. In the present invention, this peak temperature is defined as the glass transition temperature Tg (°C).

With regard to the production conditions for a 200 μm thick sheet by water-cooled blown-film extrusion, production is carried out by the method related in detail in the subsequently described examples of the invention. It should be noted that, in the subsequently described method, the feedstock charged into the respective extruders is the propylene resin composition (A) alone.

(A-iv) Peak in Temperature - Loss Tangent (tan 5) Curve Obtained by Dynamic Mechanical Analysis (DMA) on a 2 mm Thick Sheet Formed by Press-Molding

The propylene resin composition (component (A)) used in the invention must satisfy the condition that, in a temperature - loss tangent (tan 5, measured for a 2 mm thick sheet obtained by press molding) curve obtained by dynamic mechanical analysis (DMA), the tan 5 curve peaks representing glass transitions observed in the range of -60 to 20°C exhibit a non-single peak at or below 0°C.

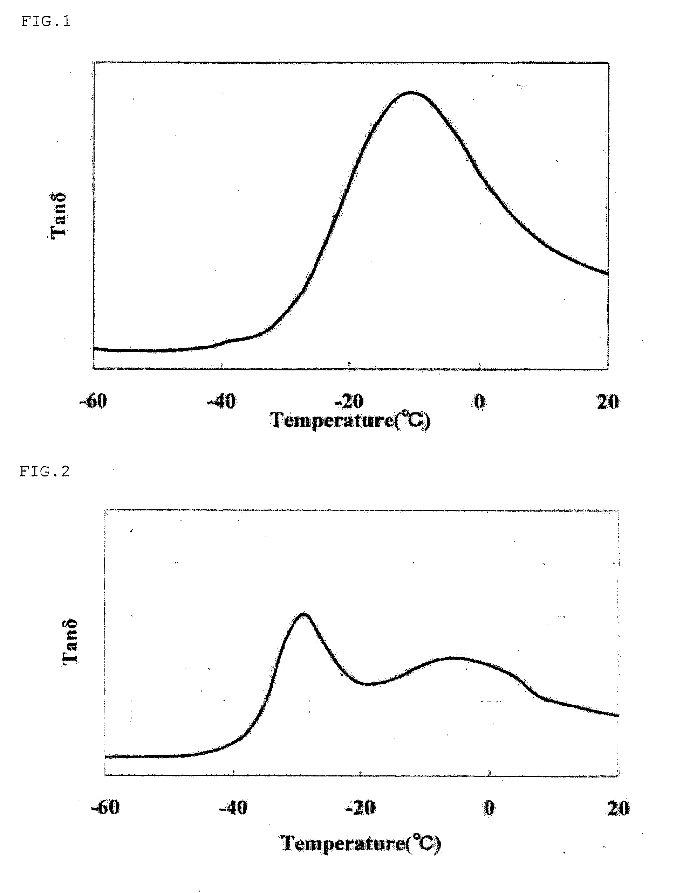

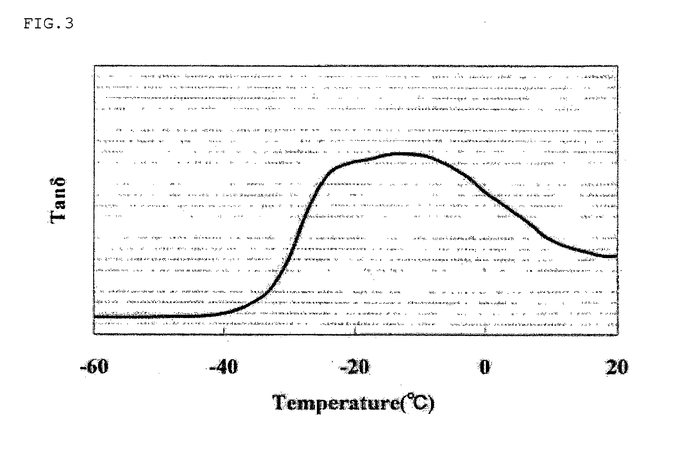

Here, "the tan 5 curve peaks exhibit a non-single peak at or below 0°C" encompasses not only cases where, as shown in FIG. 2, a plurality of distinct peaks appear, but also cases where a peak having a broad shape like that shown in FIG. 3 is observed.

Because a press-molded sheet solidifies under more gradual cooling conditions than a water-cooled blown-film extruded sheet, phase separation between component (A1) and component (A2) more readily arises. When phase separation occurs, a glass transition temperature (Tg) attributable to component (A2) begins to be observed. Because component (A2) has a content of α-olefins other than propylene which is higher than that of component (A1), component (A2) exhibits a lower Tg than component (A1). Hence, given that Tg attributable to component (A2) begins to be observed, component (A2) acts more effectively on the low-temperature impact resistance.

As noted above, when a non-single peak appears in the tan 5 curve at or below 0°C, the transparency has a greater tendency to worsen. However, in cases where component (A) assumes no phase-separated structure whatsoever, the low temperature impact resistance-improving effect by component (A2) is more likely to be insufficient.

Hence, because the propylene resin composition (A) used in the invention has such ideal phase-separation properties that phase separation cannot be confirmed in a sheet formed by water-cooled blown-film extrusion but can be confirmed in a press-molded sheet, a good balance of improved transparency and low-temperature impact resistance can be achieved.

(vi) Method of Controlling the Constituent Elements of the Propylene Resin Composition (A)

Each of the elements of propylene resin composition (A) used in the invention are controlled in the manner described below, thereby enabling production which satisfies the constituent features essential to the propylene resin composition (A) of the invention.

Control of the melting peak temperature of component (A1) (Tm (A1)) is possible by suitably adjusting the weight ratio of the propylene and the 5-olefin fed to the polymerization reactor. To control the melting peak temperature (Tm (A1)) to from 120°C to 150°C, for example, component (A1) having the desired melting peak temperature (Tm (A1)) can be prepared by adjusting the α-olefin content (α[A1]) in a range of about 0 to about 10 wt%, although this will vary also with the type of catalyst used.

Also, to control the α-olefin content of component (A2) (α[A2]) to a specific range, in cases that involve successive polymerization, the weight ratio of the propylene and the α-olefin fed to the polymerization reactor in the second step should be suitably adjusted. In cases where a metallocene catalyst is used, the relationship between the feed ratio of α-olefin and the α-olefin content within the resulting propylene-α-olefin random copolymer will differ with the type of metallocene catalyst. However, by adjusting the feed ratio, it is possible to prepare component (A2) having the required α-olefin content (α[A2]).

The amount of component (A1) (W(A1)) and the amount of component (A2) (W(A2)) may be controlled by varying the ratio between the amount of component (A1) produced in the first step (component (A1) producing step) and the amount of component (A2) produced in the second step in a case of consecutive polymerization.

Adjustment of the melt flow rate of component (A) is carried out as described above.

Peaks in Tan δ Curve for Component (A)

It is essential for component (A) to have glass transition temperatures Tg, which are temperatures that exhibit peaks on a temperature - loss tangent curve obtained by dynamic mechanical analysis (tan δ curve), such as to exhibit, as noted above: a single peak at or below 0°C in measurement using a 200 μm thick sheet obtained by water-cooled blown-film extrusion; and, a non-single peak at or below 0°C in measurement using a 2 mm thick sheet obtained by press molding.

In water-cooled blown-film extrusion, for the glass transition temperature Tg to exhibit a single peak, the difference between the α-olefin content in component (A1) (α[A1]) and the α-olefin content in component (A2) (α[A2]), which difference is expressed as α[A1] - α[A2], is set to not more than 20 wt%, and preferably not more than 16 wt%. In actual measurement, this difference should be decreased to a range at which Tg becomes a single peak.

Moreover, in the press-molding process, in order for Tg to have a non-single peak, the difference between the α-olefin content in component (A1) (α[A1]) and the α-olefin content in component (A2) (α[A2]), which difference is

expressed as ($\alpha$[A1] - $\alpha$[A2]), is set to at least 7 wt%, and preferably at least 10 wt%. In actual measurement, this difference should be increased to a range at which Tg does not become a single peak.

(vii) Ratio of Component (A) in Main Layer (1)

It is critical for the proportion of the main layer structure accounted for by the propylene resin composition (component (A)) to be in a range of from 50 to 90 wt%, and preferably from 60 to 85 wt%, per 100 wt% of the combined weight of components (A) and (B).

If the content of component (A) is too low, a good flexibility and transparency cannot be obtained. On the other hand, if the content of component (A) is too high, the impact resistance at low temperatures tends to decrease.

(2) Ethylene-$\alpha$-Olefin Copolymer (B)

Properties of Component (B)

The ethylene-$\alpha$-olefin copolymer (B) (also referred to below as "component (B)") which is used as a component of the propylene resin composition (X) making up the main layer (1) of the propylene resin sheet of the invention is a copolymer obtained by the copolymerization of ethylene with an $\alpha$-olefin having preferably from 3 to 20 carbons. Preferred examples of the $\alpha$-olefin include those having from 3 to 20 carbons, such as propylene, 1-butene, 1-pentene, 1-hexene, 1-octene and 1-heptene. Component (B) is a component which acts to increase the transparency and flexibility of the propylene resin composition (X), and must satisfy conditions (B-i) and (B-ii) below.

The propylene resin sheet of the invention is required to have flexibility, transparency and low-temperature impact resistance. With regard to transparency, in cases where the refractive index of component (B) differs considerably from that of component (A), the transparency of the resulting sheet worsens. Hence, it is also important to adjust the refractive indices matchingly. Control of the refractive index by means of density is possible. In the invention, to obtain the required transparency, it is important for the density to be set within a specific range.

The addition of component (B) is also essential for further strengthening the low-temperature impact resistance of component (A).

(B-i) Density

Component (B) used in the invention must have a density in the range of 0.860 to 0.910 g/cm$^3$.

If the density is too low, the refractive index difference will become large, worsening the transparency. Hence, at a density below 0.860 g/cm$^3$, the transparency required in this invention cannot be ensured.

On the other hand, if the density is too high, the low-temperature impact resistance, flexibility and transparency worsen. Hence, the density must be no higher than 0.910 g/cm$^3$, and is preferably not more than 0.905 g/cm$^3$, and even more preferably not more than 0.900 g/cm$^3$.

Here, the density is a value measured in general accordance with JIS K7112.

(B-ii) Melt Flow Rate of Component (B) (MFR (B))

It is critical for the main layer (1) in the invention to have suitable flow properties in order to ensure good sheet formability.

Therefore, if the melt flow rate MFR of component (B) (at 190°C and 2.16 kg) (also referred to below as "MFR (B)") is too low, the flow properties will be inadequate, and problems such as poor dispersion will occur, resulting in a decrease in transparency. Hence, it is critical for MFR (B) to be at least 0.1 g/10 min, preferably at least 0.5 g/10 min, and more preferably at least 1.0 g/10 min.

On the other hand, if MFR (B) is too high, sheet formation is unstable and film thickness variations arise. Hence, the MFR (B) must be not more than 20 g/10 min, and is preferably not more than 10 g/10 min.

The MFR is a value measured in general accordance with JIS K7210.

Method of Producing Component (B)

Component (B) used in this invention must be set to a low density in order to make the refractive index difference with component (A) small. Moreover, to suppress tackiness and bleedout, it is desirable for the crystallinity and molecular weight distributions to be narrow. Hence, in the production of component (B), it is desirable to use a metallocene catalyst which is capable of providing narrow crystallinity and molecular weight distributions.

The metallocene catalyst and the polymerization process using the same are described below.

(i) Metallocene Catalyst

Various types of known catalysts used to polymerize ethylene-$\alpha$-olefin copolymers may be employed as the metallocene catalyst. Illustrative examples include the metallocene catalysts mentioned in, e.g., Japanese Patent Application Laid-open Nos. S58-19309, S59-95292, S60-35006 and H3-163088.

(ii) Polymerization Process

Illustrative examples of polymerization processes include the following carried out in the presence of such catalysts: slurry processes, vapor phase fluidized bed processes, solution processes, and high-pressure bulk polymerization processes at a pressure of at least 200 kg/cm$^2$ and a polymerization temperature of at least 100°C. An example of a preferred production method is high-pressure bulk polymerization.

The component (B) used may be suitably selected from among commercially available metallocene-based polyethylenes. Examples of commercial products include AFFINITY and ENGAGE (available under these trade names from DuPont-Dow), KERNEL (available under this trade name from Japan Polyethylene Corporation), and EXACT (available under this trade name from Exxon Mobil).

In using these, a grade which satisfies the density and MFR that are required conditions of component (B) should be suitably selected.

Ratio of Component (B) in Main Layer Structure

It is essential that the ratio of component (B) in the main layer structure be in a range of from 10 to 50 wt% per 100 wt% of components (A) and (B) combined. If the content of component (B) is lower than 10 wt%, the low-temperature impact resistance conferred will be inadequate. On the other hand, if the content of component (B) is too high, the heat resistance worsens and thickness irregularities arise in the sheet, making it impossible to obtain a sheet having a good appearance.

The content of component (B) per 100 wt% of components (A) and (B) combined is preferably from 15 to 40 wt%, and more preferably from 15 to 35 wt%.

(3) Propylene Resin (C)

(3-1) Properties of Component (C)

It is also preferable to add the propylene resin (C) described below to the propylene resin composition (X) of the invention. Such addition improves the sheet formability and helps to suppress thinning of the sheet.

Component (A), which is used as the primary component of the propylene resin composition (X) making up the main layer is very effective for imparting a high flexibility and transparency to a laminated sheet. However, because component (A1) is a relatively low-melting component, it has less amount of high-crystallinity component, and includes problem of thinning of the sheet during the heat sealing.

When attempts are thus made to broaden the crystallinity distribution of component (A) and thereby achieve a relative increase in high-crystallinity components, the low-crystallinity components also inevitably increase. As a result, these low-crystallinity components bleed out to the surface of the laminated sheet, giving rising to stickiness and appearance defects, which makes the sheet unfit for applications requiring transparency.

By adding a specific amount of component (C) to component (A) having little high-crystallinity component, the high-crystallinity components can be increased without increasing the low-crystallinity components and the low-molecular-weight components. It is possible in this way to suppress appearance defects such as thickness variations and interfacial roughness, and to suppress thinning of the sheet during heat sealing, without giving rise to appearance defects such as bleedout.

Component (C) is a propylene resin which satisfies conditions (C-i) and (C-ii) below, such as a propylene homopolymer, a propylene-$\alpha$-olefin random copolymer or a propylene-$\alpha$-olefin block copolymer.

(C-i) Melting Peak Temperature (Tm (C))

Component (C) is preferably a propylene resin having a melting peak temperature (Tm (C)) which is higher, and more preferably at least 6°C higher, than the melting peak temperature (Tm (A1)) of the propylene-$\alpha$-olefin random copolymer component (A1). By making the melting peak temperature higher, the resulting sheet can be conferred with the ability to suppress thinning of the sheet during heat sealing without giving rise to appearance defects such as bleedout.

The melting peak temperature of component (C) (Tm (C)) is preferably in the range of more than 150°C and up to 170°C. If Tm (C) is 150°C or lower, the high crystallinity component is inadequate, the flow out of the resin cannot be controlled at low level, and thinning of the sheet during heat sealing worsens as a result. Component (C) having Tm (C) higher than 170°C is difficult to produce industrially. Tm (C) is more preferably from 155 to 170°C, and even more preferably from 158 to 167°C.

(C-ii) Melt Flow Rate (MFR (C))

Also, in order to ensure sheet formability, it is important for component (C) to have suitable flow properties. The melt flow rate MFR (at 230°C and 2.16 kg loading) (also referred to below as "MFR (C)"), which is a measure of the flow properties, is preferably in the range of 0.5 to 30 g/10 min. When MFR (C) is less than 0.5 g/10 min, dispersion worsens, which tends to give rise to the appearance defects known as gels and fisheyes. On the other hand, at more than 30 g/10 min, the film formability tends to worsen. The upper limit in MFR (C) is preferably 15 g/10 min, and more preferably 12 g/10 min. The range in MFR is most preferably from 2.5 to 12 g/10 min.

Here, MFR is a value measured in general accordance with JIS K7210.

Method of Producing Component (C)

The propylene resin component (C) may be produced by any method, so long as the above properties are satisfied. In cases where a composition of a propylene (co)polymer component (C1) and a propylene-ethylene random copolymer (C2) is produced, the propylene resin (C) may be produced using an apparatus that mixes a propylene (co)polymer (C1) and a propylene-ethylene random copolymer (C2) which have been separately produced, or the propylene resin (C) may be consecutively produced by, in a first step, producing a propylene (co)polymer (C1) and subsequently, in a second step, producing a propylene-ethylene random copolymer (C2) in the presence of the propylene (co)polymer (C1).

Preferred examples of specific methods of production are described in Japanese Patent Application Laid-open Nos. 2006-35516 and 2001-172454, the entire contents of which are incorporated herein by reference.

It is also possible to suitably select and use component (C) from among commercially available products. Illustrative examples of commercially available products include NOVATEC PP (available under this trade name from Japan Polypropylene Corporation), NEWCON (available under this trade name from Japan Polypropylene Corporation), and ZELAS (available under this trade name from Mitsubishi Chemical Corporation). In using these, a grade which satisfies the melting peak temperature and MFR that are conditions of the invention should be suitably selected.

Ratio of Component (C) in Inner Layer Components

When component (C) is used, the ratio of component (C) in the main layer (1) is preferably in the range of 1 to 100 wt% per 100 wt% of above components (A) and (B) combined.

When the amount of component (C) is too low, the high-crystallinity component will be inadequate and it will not be possible to obtain a sufficient thinning suppressing effect. Hence, this amount is preferably at least 5 wt%, and more preferably at least 10 wt%. Conversely, when the amount of component (C) is too high, decreases in physical properties such as flexibility and transparency tend to come out apparently, making it difficult to satisfy the quality required of the inventive resin composition. Hence, this amount is preferably not more than 70 wt%, and more preferably not more than 50 wt%.

In the practice of the invention, in a case of using the component (C), it is sufficient that the component (X) comprises the above component. For example, it is not always necessary to compose the propylene-α-olefin random copolymer component (A1) exhibiting a melting peak temperature in a specific range and the propylene-α-olefin random copolymer component (A2) having a specific α-olefin content to form the single composition referred to herein as propylene resin composition (A). For example, it is possible for production to include a first step of polymerizing the propylene resin (C) by a continuous polymerization process, then a step of polymerizing the propylene-α-olefin random copolymer component (A2) having a specific α-olefin content; and subsequently mixing into the resulting resin the separate propylene-α-olefin random copolymer component (A1) having a melting peak temperature in a specific range. Such a case also falls within the scope of the present invention.

2. Outer Layer (2)

The sheet of the invention preferably has an outer layer (2) disposed outside of the main layer (1). In cases where an outer layer is provided, providing also an optional layer, such as an adhesive layer, between the main layer (1) (i.e., the inner layer (1)) and the outer layer (2) is not contrary to the gist of the invention.

In cases where an outer layer is provided, the main layer (1) shall be referred to herein as the "inner layer (1)."

The material of the outer layer (2) is not limited as long as its heat-resistance and transparency are not impaired. For example, the material may be polyester resin, cyclic olefin resin, or propylene resin. In particular, a propylene resin composition (Y) is preferred.

·Properties of Propylene Resin Composition (Y)

It is important that the propylene resin composition (Y) (also referred to below as "component (Y)") used preferably as the outer layer (2) of the propylene resin sheet have an excellent transparency and heat resistance. To obtain a transparency as a sheet, not only the inner layer (1), but also the outer layer (2) must be made transparent. Moreover, the outer layer (2) must also have heat resistance, in addition to which it is necessary that it does not deform even when subjected to heat treatment such as disinfection or sterilization, and that it does not stick to the heat sealing bar during heat-sealing (fabrication).

To satisfy these requirements at a high level, it is preferred that the propylene resin composition (Y) be a propylene resin (D) (also referred to below as "component (D)") which has a melting peak temperature Tm (D) in the range of from 150 to 170°C.

(D-i) Melting Peak Temperature Tm (D)

It is proffered for component (D) to have a melting peak temperature Tm (D) in the range of 150 to 170°C, more preferably from 155 to 170°C, and still more preferably from 158 to 168°C.

When Tm (D) is less than 150°C, the heat resistance is inadequate, as a result of which the outer layer (2) easily sticks to the heat sealing bar during heat sealing. At Tm (D) above 170°C, industrial production is difficult.

(D-ii) Melt Flow Rate (MFR (D))

It is important for the component (D) to have suitable flow properties in order to obtain a good formability that does not cause interface roughness and surface roughness during lamination and does not give rise to problems such as thickness variations. The melt flow rate MFR (at 230°C and a load of 2.16 kg) (sometimes referred to below as "MFR (D)"), which is a measure of flowability, is in the range of preferably 2 to 20 g/10 min, more preferably 2 to 15 g/10 min, and still more preferably 4 to 15 g/10 min.

At a MFR (D) below 2 g/10 min, interfacial roughness and surface roughness tend to arise, as a result of which a sheet having a good appearance may not be obtained. On the other hand, at a MFR (D) in excess of 20 g/10 min, thickness variations readily arise, and formability is often difficult.

Here, the MFR is a value measured in general accordance with JIS K7210.

Method of Producing Component (D)

The propylene resin (D) used in the invention, so long as it satisfies the above melting point range, may be a propylene homopolymer, a random copolymer with another $\alpha$-olefin, or a block copolymer with another $\alpha$-olefin.

The propylene resin (D) used in the invention may be produced by any method. In cases where a composition (block copolymer) of a propylene (co)polymer component (D1) and a propylene-ethylene random copolymer (D2) is produced, the propylene resin (D) may be prepared using an apparatus which mixes a propylene (co)polymer (D1) and a propylene-ethylene random copolymer (D2) that have been separately produced, or the propylene resin (D) may be consecutively produced by first preparing a propylene (co)polymer (D1), then preparing a propylene-ethylene random copolymer (D2) in the presence of the propylene (co)polymer (D1).

It is also possible to suitably select and use component (D) from among commercially available products. Illustrative examples of commercially available products include NOVATEC PP (available under this trade name from Japan Polypropylene Corporation), NEWCON (available under this trade name from Japan Polypropylene Corporation), and ZELAS (available under this trade name from Mitsubishi Chemical Corporation). In using these, a grade which satisfies the melting peak temperature and MFR that are conditions of the invention should be suitably selected.

Ethylene-$\alpha$-Olefin Copolymer (D3)

The following elastomeric component (D3) may also be added to the propylene resin (D) so as to impart impact resistance at low temperature.

The elastomeric component which may be blended in the outer layer (2) of the polypropylene resin sheet is exemplified by ethylene-$\alpha$-olefin copolymers. Ethylene-$\alpha$-olefin copolymers are copolymers obtained by the copolymerization of ethylene with an $\alpha$-olefin having preferably from 3 to 20 carbons. Preferred examples of the $\alpha$-olefin include

those having from 3 to 20 carbons, such as propylene, 1-butene, 1-pentene, 1-hexene, 1-octene and 1-heptene.

Ethylene-$\alpha$-olefin copolymers which may be advantageously used in this invention must have a density matching that of component (D) in order to make the refractive index difference with component (D) small. Moreover, to suppress tackiness and bleedout, it is desirable for the crystallinity and molecular weight distributions to be narrow. Hence, it is desirable to use an ethylene-$\alpha$-olefin copolymer polymerized with a metallocene catalyst that is capable of providing a narrow crystallinity and a narrow molecular weight distribution.

The ethylene-$\alpha$-olefin copolymer used as component (D3) may be suitably selected from among commercially available metallocene-based polyethylenes. Examples of commercial products include AFFINITY and ENGAGE (available under these trade names from DuPont-Dow), KERNEL (available under this trade name from Japan Polyethylene Corporation), and EXACT (available under this trade name from Exxon Mobil). In using these, a suitable density and MFR should be selected so as to avoid problems with transparency, tackiness and bleedout from arising.

Other exemplary elastomeric components include styrene-based elastomers. The styrene-based elastomer may be suitably selected and used from among those which are commercially available. Illustrative examples include hydrogenates of styrene-butadiene block copolymers available as Kraton G from Kraton Polymer Japan Co., Ltd. or under the trade name Tuftec from Asahi Chemical Industry Co., Ltd., hydrogenates of styrene-isoprene block copolymers available under the trade name Septon from Kuraray Co., Ltd., hydrogenates of styrene-vinyl polyisoprene block copolymers available under the trade name Hybrar from Kuraray Co., Ltd., and hydrogenates of styrene-butadiene random copolymers available under the trade name Dynaron from JSR Corporation.

Component Ratios within Component (Y) in the Outer Layer

When component (D3), which may be advantageously used in the invention, is employed, it is preferable for the proportion of the outer layer (2) accounted for by component (D) to be in the range of 60 to 99 wt%, and it is preferable for the proportion of the outer layer (2) accounted for by component (D3) to be in the range from 1 to 40 wt%. The content of component (D) is more preferably from 70 to 95 wt%, and the content of component (D3) is more preferably from 5 to 30 wt%.

If the content of component (D) is less than 60 wt%, that is, if the content of component (D3) is 40 wt% or more, the heat resistance may be inadequate and deformation may arise in the heat treatment step. At a component (D) content of 99 wt% or more, i.e., at a component (D3) content of less than 1 wt%, the low temperature impact resistance-imparting effect is inadequate.

3. Innermost Layer (3)

Preferably, the sheet of the invention also has an innermost layer (3). That is, the sheet is composed of at least three layers which include, in order, an outer layer (2), an inner layer (1) and an innermost layer (3). This innermost layer (3) may be provided in order to, for example, control the heat-sealing properties of the multilayer sheet, or impart low-temperature sealability or easy peelability, although the purpose for providing this layer is of no particular concern here.

The resin composition (Z) used in the innermost layer is not subject to any particular limitation. Various types of resins may be used depending on the intended purpose, although it is preferable for this resin composition (Z) to have suitable flow properties which enable easy sheet formability so that interfacial roughness and surface roughness do not arise during lamination and problems such as thickness variation do not occur. The melt flow rate MFR (at 230°C and 2.16 kg loading) is preferably in the range of 2 to 15 g/10 min, and more preferably from 2.5 to 10 g/10 min.

At a MFR (or MFR (Z)) of the resin composition (Z) of less than 2 g/10 min, interfacial roughness and surface roughness tend to arise, and a sheet having a good appearance may not be obtained. On the other hand, at a MFR (Z) greater than 15 g/min, thickness variations tends to arise and sheet formation may be difficult.

Here, MFR is a value measured in general accordance with JIS K7210.

Components preferred for use in the innermost layer are exemplified by propylene resin compositions containing a propylene-ethylene random copolymer produced using a metallocene catalyst and an ethylene-$\alpha$-olefin copolymer produced using a metallocene catalyst, and propylene resin compositions containing a propylene resin composition (A), an ethylene-$\alpha$-olefin copolymer (B) and a propylene resin (C).

Examples of commercial products that may be used as the propylene-ethylene random copolymer produced using a metallocene catalyst include those available under the trade name WINTEC from Japan Polypropylene Corporation. Examples of commercial products that may be used as the ethylene-$\alpha$-olefin copolymer include those available under the trade names AFFINITY and ENGAGE from DuPont-Dow, those available under the trade name KERNEL from Japan Polyethylene Corporation, and those available under the trade name EXACT from Exxon Mobil.

4. Additional Ingredients (Additives)

To enable the propylene resin sheet of the invention to be suitably employed as a sheet, propylene resin compositions (X), (Y) and (Z) used in, respectively, the inner layer (1), outer layer (2) and innermost layer (3) of the inventive multilayer sheet may include optional additives within ranges that do not significantly diminish the advantageous effects of the invention with regard to bleedout and the like. Such optional ingredients are exemplified by antioxidants, crystal nucleating agents, clarifiers, lubricants, antiblocking agents, antistatic agents, haze inhibitors, neutralizing agents, metal inactivators, colorants, dispersants, peroxides, fillers and fluorescent whiteners that are used in conventional polyolefin resin materials. Specific examples of the various additives are listed below. In addition, elastomers may be included as flexibility-imparting ingredients within a range which does not significantly diminish the advantageous effects of the invention.

(1) Antioxidants

Illustrative examples of antioxidants include phenolic antioxidants, such as tris(3,5-di-t-butyl-4-hydroxybenzyl) isocyanurate, 1,1,3-tris(2-methyl-4-hydroxy-5-t-butylphenyl)butane, octadecyl-3-(3,5-di-t-butyl-4-hydroxyphenyl)propionate, pentaerythrityltetrakis{3-(3,5-di-t-butyl-4-hydroxyphenyl)propionate}, 1,3,5-trimethyl-2,4,6-tris(3,5-di-t-butyl-4-hydroxybenzyl)benzene, 3,9-bis[2-{3-(3-t-butyl-4-hydroxy-5-methylphenyl)propionyloxy}-1,1-dimethylethyl] -2,4,8,10-tetraoxaspiro[5, 5] undecane and 1, 3, 5-tris(4-t-butyl-3-hydroxy-2,6-dimethylbenzyl)isocyanuric acid.

Examples of phosphorus-based antioxidants include tris (mixed mono- and di-nonylphenylphosphite), tris(2,4-di-t-butylphenyl)phosphite, 4,4'-butylidenebis(3-methyl-6-t-butylphenyl-di-tridecyl)phosphite, 1,1,3-tris(2-methyl-4-di-tridecylphosphite-5-t-butylphenyl)butane, bis(2,4-di-t-butylphenyl)pentaerythritol diphosphite, tetrakis(2,4,di-t-butylphenyl)-4,4'-biphenylene diphosphite, tetrakis(2,4-di-t-butyl-5-methylphenyl)-4,4'-biphenylene diphosphite and bis(2,6-di-t-butyl-4-methylphenyl)pentaerythritol diphosphite.

Examples of sulfur-based antioxidants include distearyl thiodipropionate, dimyristyl thiodipropionate and pentaerythritol tetrakis(3-lauryl thiopropionate).

These antioxidants may be used singly or as combinations of two or more thereof, insofar as the advantageous effects of the invention are not compromised.

The amount of antioxidant included per 100 parts by weight of the respective resins is from 0.01 to 1.0 part by weight, preferably from 0.02 to 0.5 parts by weight, and more preferably from 0.05 to 0.1 parts by weight. If the amount included is below the above range, a thermal stability effect is not obtained and deterioration takes place when the resin is produced, causing scorching and fisheyes. On the other hand, at an amount in excess of the above range, the additive itself becomes a foreign matter, causing fisheyes, which is undesirable.

(2) Antiblocking Agents

The antiblocking agent has an average particle size of from 1 to 7 $\mu$m, preferably from 1 to 5 $\mu$m, and more preferably from 1 to 4 $\mu$m. At an average particle size below 1 $\mu$m, the slip characteristics and bag openability diminish, which is undesirable. On the other hand, at more than 7 $\mu$m, the transparency and tendency to scratch markedly worsen, which is undesirable. Here, the average particle size is a value measured by the coal tar counter method.

Examples of antiblocking agents that may be used include inorganic agents such as synthetic or natural silicas (silicon dioxide), magnesium silicate, aluminosilicates, talc, zeolites, aluminum borate, calcium carbonate, calcium sulfate, barium sulfate and calcium phosphate.

Examples of organic antiblocking agents include polymethyl methacrylate, polymethylsilsesquioxane (silicone), polyamides, polytetrafluoroethylene, epoxy resins, polyester resins, benzoguanamine formaldehyde (urea resin) and phenolic resins.

Synthetic silicas and polymethyl methacrylate are especially preferred from the standpoint of balance in dispersibility, transparency, antiblocking properties and scratch resistance.

The antiblocking agent may be one that has been surface-treated. Examples of surface treatment agents which may be used include surfactants, metal soaps, organic acids such as acrylic acid, oxalic acid, citric acid and tartaric acid, higher alcohols, esters, silicones, fluoroplastics, silane coupling agents and condensed phosphates such as sodium hexametaphosphate, sodium pyrophosphate, sodium tripolyphosphate and sodium trimetaphosphate. Organic acid treatment, particularly citric acid treatment, is especially preferred. The method of treatment is not subject to any particular limitation. Use may be made of a known method, such as surface spraying or dipping.

The particles of antiblocking agent may have any shape. For example, they may have a shape that is spheroidal, angular, columnar, needle-like, plate-like or amorphous.

These antiblocking agents may be used singly or as combinations of two or more thereof, insofar as the advantageous effects of the invention are not compromised.

The amount of antiblocking agent compounded per 100 parts by weight of resin is typically from 0.01 to 1.0 part by weight, preferably from 0.05 to 0.7 parts by weight, and more preferably from 0.1 to 0.5 parts by weight. When the amount included is less than the above range, the sheet antiblocking properties, slip characteristics and bag openability tend to decrease. When the amount is greater than the above range, a loss tends to occur in the transparency of the sheet or the antiblocking agent itself becomes foreign matter and causes fisheyes, which is undesirable.

(3) Slip Agents

Exemplary slip agents include monoamides, substituted amides and bisamides. Any one or combinations of two or more of these may be used.

Examples of monoamides include saturated fatty acid monoamides, such as laurylamide, palmitamide, stearamide, behenamide and hydroxystearamide.

Examples of unsaturated fatty acid monoamides include oleamide, erucamide and ricinolamide.

Examples of substituted amides include N-stearyl stearamide, N-oleyl oleamide, N-stearyl oleamide, N-oleyl stearamide, N-stearyl erucamide and N-oleyl palmitamide.

Examples of bisamides include saturated fatty acid bisamides such as methylenebis(stearamide), ethylenebis(capramide), ethylenebis(lauramide), ethylenebis(stearamide), ethylenebis(isostearamide), ethylenebis(hydroxystearamide), ethylenebis(behenamide), hexamethylenebis(stearamide), hexamethylenebis(behenamide), hexamethylenebis(hydroxystearamide), N,N'-distearyladipamide and N,N'-distearylsebacamide.

Examples of unsaturated fatty acid bisamides include ethylenebis(oleamide), hexamethylenebis (oleamide), N,N'-dioleyl adipamide, N,N'-dioleyl sebacamide.

Examples of aromatic bisamides include m-xylylenebis(stearamide) and N,N'-distearyl isophthalamide.

Of these, among the fatty acid amides, the use of oleamide, erucamide and behenamide is especially preferred.

The amount of slip agent compounded per 100 parts by weight of the resin is typically from 0.01 to 1.0 part by weight, preferably from 0.05 to 0.7 parts by weight, and more preferably from 0.1 to 0.4 parts by weight. Below the foregoing range, the bag openability and slip characteristics tend to be poor. Above the foregoing range, floating up of the strip agent becomes excessive, as a result of which the slip agent bleeds to the sheet surface, worsening the transparency.

(4) Nucleating Agent

Illustrative examples of nucleating agents include sodium 2,2-methylenebis(4,6-di-t-butylphenyl)phosphate, talc, sorbitol compounds such as 1,3,2,4-di(p-methylbenzylidene) sorbitol, hydroxy-di(t-butylbenzoic acid) aluminum, 2,2-methylenebis(4,6-di-t-butylphenyl)phosphoric acid, and lithium $C_{8-20}$ aliphatic monocarboxylate mixtures (available from ADEKA under the trade name NA21).

The above nucleating agent is included in an amount per 100 parts by weight of the respective resins of typically from 0.0005 to 0.5 parts by weight, preferably from 0.001 to 0.1 parts by weight, and more preferably from 0.005 to 0.05 parts by weight. Below the foregoing range, effects as a nucleating agent are not obtained. Above the foregoing range, the nucleating agent itself becomes a foreign matter, causing fisheyes, which is undesirable.

Examples of nucleating agents other than the above include high-density polyethylene resins. The high-density polyethylene resin has a density of typically from 0.94 to 0.98 g/cm$^3$, and preferably from 0.95 to 0.97 g/cm$^3$. At densities outside this range, a transparency-improving effect cannot be obtained. The melt flow rate (MFR) of the high-density polyethylene resin at 190°C is typically at least 5 g/10 min, preferably from 7 to 500 g/10 min, and more preferably from 10 to 100 g/10 min. At a MFR below 5 g/10 min, the size of dispersed particles of high-density polyethylene resin does not become sufficiently small, as a result of which the high-density polyethylene resin itself becomes a foreign matter, causing fisheyes, which is undesirable. Also, in order for the high-density polyethylene resin to microdisperse, it is preferable for the high-density polyethylene resin have a higher MFR than the MFR of the propylene resin in the invention.

Production of the high-density polyethylene resin used as a nucleating agent is not subject to any particular limitation concerning the method of production and the catalyst, so long as a polymer having the desired physical properties can be obtained. Exemplary catalysts include Ziegler-Natta catalysts (i.e., catalysts based on a combination of a supported or unsupported halogen-containing titanium compound and an organoaluminum compound) and Kaminsky catalysts (catalysts based on a combination of a supported or unsupported metallocene compound and an organoaluminum compound, particularly an alumoxane). The shape of the high-density polyethylene resin is not subject to any particular limitation, and may be in the form of pellets or in powder form.

When used as a nucleating agent, the amount of high-density polyethylene compounded per 100 parts by weight of the resin is typically form 0.01 to 5 parts by weight, preferably from 0.05 to 3 parts by weight, and more preferably from 0.1 to 1 part by weight. Below the foregoing range, effects as a nucleating agent are not obtained. Above the foregoing range, the high-density polyethylene itself becomes a foreign matter, causing fisheyes, which is undesirable.

(5) Neutralizing Agent

Illustrative examples of neutralizing agents include calcium stearate, zinc stearate, hydrotalcite and Mizukalac (available from Mizusawa Industrial Chemicals, Ltd.).

When a neutralizing agent is included, the amount compounded per 100 parts by weight of the resin is typically from 0.01 to 1.0 part by weight, preferably from 0.02 to 0.5 parts by weight, and more preferably from 0.05 to 0.1 parts by weight. At an amount below the foregoing range, because effects as a neutralizing agent are not obtained, deteriorated resin at the interior of the extruder is scraped out, causing fisheyes. Above the foregoing range, the neutralizing agent itself becomes a foreign matter, causing fisheyes, which is undesirable.

(6) Light Stabilizers

Hindered amine stabilizers are suitably used as the light stabilizer. Compounds known to the art which have a structure wherein all the hydrogens bonded to the carbons at the 2 and 6 positions of piperidine have been substituted with methyl groups may be used without particular limitation. Examples of compounds that may be used include those listed below.

Illustrative examples include polycondensates of dimethyl succinate with 1-(2-hydroxyethyl)-4-hydroxy-2,2,6,6-tetramethylpiperidine, tetrakis(1,2,2,6,6-pentamethyl-4-piperidyl) 1,2,3,4-butanetetracarboxylate, bis(1,2,2,6,6-pentamethyl-4-piperidyl) sebacate, the condensate of N,N-bis(3-aminopropyl)ethylenediamine with 2,4-bis[N-butyl-N-(1, 2, 2, 6, 6-pentamethyl-4-piperidyl) amino] -6-chloro-1,3,5-triazine, bis(2,2,6,6-tetramethyl-4-piperidyl) sebacate, poly[{6-(1,1,3,3-tetramethylbutyl)imino-1,3,5-triazine-2,4-diyl} {(2,2,6,6-tetramethyl-4-piperidyl)imino}hexamethylene{2, 2, 6, 6-tetramethyl-4-piperidyl}imino] and poly[(6-morpholino-s-triazine-2,4-diyl)[(2,2,6,6-tetramethyl-4-piperidyl)imino] hexamethylene {(2,2,6,6-tetramethyl-4-piperidyl)imino}].

These hindered amine stabilizers may be used singly or as a combination of two or more thereof, insofar as the advantageous effects of the invention are not compromised.

In cases where a hindered amine stabilizer is included, it is desirable for the amount compounded per 100 parts by weight of the resin to be from 0.005 to 2 parts by weight, preferably from 0.01 to 1 part by weight, and more preferably from 0.05 to 0.5 parts by weight.

At a hindered amine stabilizer content below 0.005 parts by weight, there is no stability (e.g., heat resistance, antidegrading property) improving effect, whereas at above 2 parts by weight, the stabilizer itself becomes a foreign matter, causing fisheyes, which is undesirable.

(7) Antistatic Agent

Known additives that have hitherto been used as antistatic agents may be employed here as antistatic agents without any particular limitation. Exemplary antistatic agents include anionic surfactants, cationic surfactants, nonionic surfactants and amphoteric surfactants.

Illustrative examples of anionic surfactants include carboxylates such as fatty acid or resin acid soaps, N-acylcarboxylates, ether carboxylates and fatty acid amine salts; sulfonates such as sulfosuccinates, ester sulfonates and N-acylsulfonates; sulfates such as sulfated oils, sulfuric acid esters, alkyl sulfates, alkylpolyoxyethylene salts of sulfuric acids, ether sulfates and amide sulfates; and phosphates such as alkyl phosphates, alkylpolyoxyethylene salts of phosphoric acid, ether phosphates and amide phosphates.

Illustrative examples of cationic surfactants include amine salts such as alkylamine salts, quaternary ammonium salts such as alkyltrimethylammonium chloride, alkylbenzyldimethylammonium chloride, alkyldihydroxyethylmethylammonium chloride, dialkyldimethylammonium chloride, tetraalkylammonium salts, N,N-di(polyoxyethylene)dialkylammonium salts and ammonium salts of N-alkylalkanamides; alkylimidazoline derivatives such as 1-hydroxyethyl-2-alkyl-2-imidazoline and 1-hydroxyethyl-1-alkyl-2-alkyl-2-imidazoline; and imidazolinium salts, pyridinium salts and isoquinolium salts.

Illustrative examples of nonionic surfactants include those in the form of ethers, such as alkylpolyoxyethylene ethers and p-alkylphenylpolyoxyethylene ethers; those in the form of ether esters, such as fatty acid sorbitan polyoxyethylene ethers, fatty acid sorbitol polyoxyethylene ethers and fatty acid glycerol polyoxyethylene ethers; those in the form of esters, such as fatty acid polyoxyethylene esters, monoglycerides, diglycerides, sorbitan esters, sucrose esters, dihydric alcohol esters and boric acid esters; and those in the form of nitrogen-containing compounds, such as dialcohol alkylamines, dialcohol alkylamine esters, fatty acid alkanolamides, N,N-di(polyoxyethylene)alkanamides, alkanolamine esters, N,N-di(polyoxyethylene)alkanamines, aminoxides and alkylpolyethyleneimines.

Illustrative examples of amphoteric surfactants include those in the form of amino acids, such as monoaminocarboxylic acids and polyaminocarboxylic acids; those in the form of N-alkyl-β-alanines, such as N-alkylaminopropionic acid salts and N,N-di(carboxymethyl)alkylamine salts; those in the form of betaines, such as N-alkylbetaines, N-alkylamide betaines, N-alkylsulfobetaines, N,N-di(polyoxyethylene)alkylbetaines and imidazolium betaine; and alkylimidazoline derivatives, such as 1-carboxymethyl-1-hydroxy-1-hydroxyethyl-2-alkyl-2-imidazoline and 1-sulfoethyl-2-alkyl-2-imidazoline.

Of these, nonionic surfactants and amphoteric surfactants are preferred. Nonionic surfactants, either in the form of esters, such as monoglycerides, diglycerides, boric acid esters, dialcohol alkylamines, dialcohol alkylamine esters and amides, or in the form of nitrogen-containing compounds, and amphoteric surfactants in the form of betaines are especially preferred.

Commercial products may be used as the antistatic agent. Illustrative examples include Electrostripper TS5 (glycerol monostearate, available under this trade name from Kao Corporation), Electrostripper TS6 (stearyl diethanolamine, available under this trade name from Kao Corporation), Electrostripper EA (lauryl diethanolamine, available under this trade name from Kao Corporation), Electrostripper EA-7 (polyoxyethylene laurylamine capryl ester, available under this trade name from Kao Corporation), Denon 331P (stearyl diethanolamine monostearate, available under this trade name from Maruzen Chemical Trading Co., Ltd.), Denon 310 (alkyl diethanolamine fatty acid monoester, available under this trade name from Maruzen Chemical Trading Co., Ltd.), Resistat PE-139 (stearic acid mono and diglyceride boric acid esters, available under this trade name from Dai-ichi Kogyo Seiyaku Co., Ltd.), Chemistat 4700 (alkyl dimethylbetaine, available under this trade name from Sanyo Chemical Industries, Ltd.) and Leostat S (alkyl diethanolamide, available under this trade name from Lion Corporation).

When an antistatic agent is included, the amount compounded per 100 parts by weight of resin is typically from 0.01 to 2 parts by weight, preferably from 0.05 to 1 part by weight, more preferably from 0.1 to 0.8 parts by weight, and even more preferably from 0.2 to 0.5 parts by weight. These antistatic agents may be used singly or as combinations of two or more thereof, insofar as the advantageous effects of the invention are not compromised. At an amount below 0.01 parts by weight, the antistatic agent is unable to reduce the surface resistivity and prevent damage due to static electricity. At more than 2 parts by weight, the surface of the sheet has a tendency to shed powder due to bleeding.

(8) Elastomers

Exemplary elastomers include, but are not particularly limited to, styrene-based elastomers. A commercially available product may be suitably selected and used as the styrene-based elastomer. Illustrative examples include hydrogenates of styrene-butadiene block copolymers available as Kraton G from Kraton Polymer Japan Co., Ltd. or under the trade name Tuftec from Asahi Chemical Industry Co., Ltd., hydrogenates of styrene-isoprene block copolymers available under the trade name Septon from Kuraray Co., Ltd., hydrogenates of styrene-vinyl polyisoprene block copolymers available under the trade name Hybrar from Kuraray Co., Ltd., and hydrogenates of styrene-butadiene random copolymers available under the trade name Dynaron from JSR Corporation.

[II] Production of Resin Compositions for Respective Layers of Propylene Resin Sheet

The propylene resin composition (X) making up the inner layer (1) in the propylene resin sheet of the invention is obtained by a method which involves mixing the above-described propylene resin composition (A), ethylene-$\alpha$-olefin copolymer (B), and if necessary propylene resin (C), and moreover other added ingredients as needed in, for example, a Henschel mixer, V blender, ribbon blender or tumbler blender, followed by kneading in a kneader such as a single-screw extruder, a multi-screw extruder, a kneader or a Banbury mixer.

The propylene resin composition (Y) making up the outer layer (2) in the propylene resin sheet of the invention is obtained by a method which involves mixing the above-described propylene resin (D) and other added ingredients as needed in, for example, a Henschel mixer, V blender, ribbon blender or tumbler blender, followed by kneading in a kneader such as a single-screw extruder, a multi-screw extruder, a kneader or a Banbury mixer.

The propylene resin composition (Z) making up the innermost layer (3) in the propylene resin sheet of the invention is obtained by a method which involves mixing the desired resin components and other added ingredients as needed in, for example, a Henschel mixer, V blender, ribbon blender or tumbler blender, followed by kneading in a kneader such as a single-screw extruder, a multi-screw extruder, a kneader or a Banbury mixer.

The respective components may be mixed at the same time, or a portion may be prepared as a masterbatch, then mixed and kneaded.

[III] Propylene Resin Sheet

The propylene resin sheet of the invention can be produced by a known method using the above-described propylene resin compositions. Production is carried out by a known technique, such as extrusion using a T-die or a circular die.

In the propylene resin sheet of the invention, based on an arbitrary value of 100 for the overall thickness of the sheet, the proportion of the overall sheet thickness accounted for by the inner layer is from 50 to 98, and preferably from 60 to 90. When the proportion of the overall sheet thickness accounted for by the inner layer is less than 50, the flexibility and impact resistance of the sheet tend to be inferior; at a proportion greater than 98, the heat resistance tends to be inferior.

Based on an arbitrary value of 100 for the overall thickness of the sheet, the outer layer of the propylene resin sheet of the invention has a thickness of at least 2 but less than 50, and preferably at least 5 but less than 30.

When an innermost layer is additionally provided in the propylene resin sheet of the invention, based on an arbitrary value of 100 for the overall thickness of the sheet, the innermost layer has a thickness of at least 2 but less than 48, and preferably at least 5 but less than 30.

The propylene resin sheet of the invention has an excellent flexibility, transparency, impact resistance, heat resistance and cleanliness, and is able to suppress a loss of transparency due to appearance defects such as thickness irregularities and interfacial roughness. Moreover, with an excellent impact resistance at an extremely low temperature being exhibited, the sheet is ideally suited for use in heat-treatable packaging bags which must undergo a heat treatment operation such as disinfection or sterilization, and particularly IV infusion bags.

The polypropylene resin sheet of the invention is characterized by having an excellent flexibility even after heat treatment. It is desirable that the sheet have a tensile modulus, which is a measure of flexibility, of 400 MPa or less. At a tensile modulus of 400 MPa or less, preferably 380 MPa or less, and more preferably 350 MPa or less, the sheet ceases to feel stiff, and thus it has a good hand and is able to convey a sense of quality, which is a remarkable feature.

The propylene resin sheet of the invention, by having an internal haze (a measure of transparency) following heat treatment of 10% or less, preferably 8% or less, and more preferably 7% or less, allows the contents to be clearly seen, a quality which is highly desirable in that it enables one to check whether foreign matter is present in the bag contents.

The propylene resin sheet of the invention has an impact resistance, particularly at a very low temperature of -25°C, for example, which is excellent. In an impact strength test at -25°C, which is a measure of the low-temperature impact resistance, the sheet has an excellent impact resistance of 5 kJ/m or more. This is an excellent result in that it allows the sheet to be used as a product which will not fail even should it be dropped during, for example, transport or storage.

In addition, the propylene resin sheet of the invention has an excellent heat resistance. Namely, it exhibits an outstanding heat resistance without deformation even when heat treatment at about 121°C is carried out. A deformed sheet has a bad appearance and a reduced product value, making it unfit for use as a product.

Furthermore, the propylene resin sheet of the invention has an excellent cleanliness. In the innermost layer (3) which comes into contact with the contents, it is desirable to employ a propylene resin composition which is obtained using a metallocene catalyst and has exceedingly low contents of low-molecular weight components and low-regularity components that may contaminate the contents.

When heat sealing has been carried out on the propylene resin sheet of the invention, the sheet has a higher shape-holding temperature for heat-sealing areas, an excellent fabricability is given. Generally, when a propylene resin sheet is heat-sealed, there exist temperatures at which the sheet undergoes large changes in shape; i.e., temperatures at which the heat-sealed areas become extremely thin, or extremely thick areas form at the periphery of the heat-sealed areas. As used herein, "shape-holding temperature" refers to an upper limit temperature which does not give rise to such large changes in shape due to heat sealing, and is determined by the following method. That is, the propylene resin sheet is heat-sealed (heat-sealing conditions: pressure, 3.4 kgf/cm$^2$; time, 1.5 seconds; temperature, 120 to 170°C at 5°C intervals), and the heat-sealed area is examined under an optical microscope. The degree of deformation in the heat-sealed area is visually confirmed, the temperature at which a large change in shape occurs due to heat-sealing that is, at which the heat-sealing area becomes extremely thin or extremely thick areas form at the periphery of the heat-sealed area is measured, and a temperature 5°C lower than this temperature is treated as the shape-holding temperature. When the shape-holding temperature is 140°C or more, thinning of the heat-sealed area is suppressed, resulting in excellent strength retention. The shape-holding temperature is preferably at least 145°C, and most preferably at least 150°C.

EXAMPLES

To more concretely and clearly explain the invention, the invention is illustrated below by contrasting examples of the invention with comparative examples, thereby demonstrating the sense and significance of the constitution of the invention. However, the invention is not limited by these examples. The physical property measurement methods, methods of characterization and resin materials used in the examples and comparative examples are described below.

1. Resin Property Measurement Methods

(1) MFR:

Propylene resin composition (A), propylene resin (C) and propylene resin (D) were measured in accordance with JIS K7210, Method A, Condition M; namely, at a test temperature of 230°C, a nominal load of 2.16 kg, and a die shape having a diameter of 2.095 mm and a length of 8.00 mm.
Ethylene-$\alpha$-olefin copolymer (B) was measured in accordance with JIS K7210, Method A, Condition D; namely, at a test temperature of 190°C, a nominal load of 2.16 kg, and a die shape having a diameter of 2.095 mm and a length of 8.00 mm.

(2) Density:

The density was measured by the density gradient tube method in general accordance with JIS K7112, Method D.

(3) Melting Peak Temperature:

A differential scanning calorimeter (DSC) manufactured by Seiko Instruments, Inc. was used. After placing a 5.0 mg sample in the calorimeter and holding it at 200°C for 5 minutes, the sample was crystallized by lowering the temperature to 40°C at a ramp-down rate of 10°C/min, then melted at a ramp-up rate of 10°C/min, at which time the melting peak temperature was measured.

(4) Dynamic Mechanical Analysis

The samples used were cut in the form of 10 mm wide $\times$ 18 mm long strips from 200 $\mu$m thick sheets obtained by water-cooled blown-film extrusion under the conditions described below and from 2 mm thick sheets obtained by press molding under the conditions described below. In cases where stress detection when using a 200 $\mu$m thick sheet is difficult, measurement was carried out after layering together two such sheets. The apparatus used was an ARES manufactured by Rheometric Scientific. The frequency was 1 Hz. The measurement temperature was ramped up in a stepwise manner from -60°C, and measurement was carried out until the sample melted and measurement became impossible. Measurement was carried out at a strain in the range of 0.1 to 0.5%.

Water-Cooled Blown-Film Extrusion (for Propylene Resins PP (A-1) to PP (A-3)):

Using a single-screw extruder having a 50 mm bore as the inner layer extruder and single-screw extruders having a bore of 40 mm as the outer layer extruder and the innermost layer extruder, Propylene Resin A was charged into all of the extruders and was extruded at a temperature setting of 200°C from a circular die having a mandrel diameter of 100 mm and a lip width of 3.0 mm, then water-cooled with a water cooling ring adjusted to 20°C. Water-cooled blown-film extrusion was carried out in this way at a speed of 10 m/min to a lay flat width of 200 mm, thereby giving a 200 $\mu$m thick sheet.

Water-Cooled Blown-Film Extrusion (for Propylene Resins PP (A-4) to PP (A-9)):

Using a single-screw extruder having a 30 mm bore as the inner layer extruder and single-screw extruders having a bore of 18 mm as the outer layer extruder and the innermost layer extruder, Propylene Resin A was charged into all of the extruders and was extruded at a temperature setting of 200°C from a circular die having a mandrel diameter of 50 mm and a lip width of 1.0 mm, and water-cooled with a water cooling ring adjusted to 10°C. Water-cooled blown-film extrusion was carried out in this way at a speed of 3 m/min to a lay flat width of 90 mm, thereby giving a 200 $\mu$m thick sheet.

Press-Molding:

Pre-heating at 230°C was carried out for 5 minutes, following which a pressure of 50 kgf/cm$^2$ was applied for 3 minutes at the same temperature. A pressure of 100 kgf/cm$^2$ was then immediately applied with a press adjusted to 30°C, following which cooling and solidification were carried out, thereby giving a pressed sheet having a thickness of 2 mm.
(5) The amounts of components (A1) and (A2) (denoted below as, respectively, "W(A1)" and W(A2)," and the $\alpha$-olefin contents of components (A1) and (A2) (denoted below as, respectively, "$\alpha$[A1]" and "$\alpha$[A2]") were measured by the above-described methods.

2. Evaluation Methods for Sheet

(1) Heat Resistance:

Evaluation of Heat Resistances of Laminated Sheets in Example 1 and Comparative Examples 1 and 2

The propylene resin sheet having a tubular shape was cut to a size of 210 mm in the machine direction, and one of the cut sides was heat-sealed (heat-sealing conditions: pressure, 3.4 kgf/cm$^2$; time, 1.5 seconds; temperature, 150°C; using a heat sealer manufactured by Tester Sangyo Co., Ltd.) and formed into a bag shape. Next, the interior was filled with 500 mL of pure water, and the other cut side was sealed by heat-sealing with a heat sealer. Sealing was carried out such that the distance between the two heat seals was 200 mm. The sample bag thus obtained was placed in a high-temperature and high-pressure cooking sterilization tester (RCS-40 RTGN, manufactured by Hisaka Works, Ltd.), after which pressure was applied and the ambient temperature was raised to and held at 121°C for 30 minutes. This was followed by cooling to about 40°C, whereupon the sample bag was removed from the tester (the sheet (sample bag) which has been subjected to this sterilization treatment is sometimes referred to below as "the heat-treated sheet").
The heat resistance of the heat-treated sheet was evaluated according to the following criteria.
NG: Not fit for use owing to deformation, wrinkling or internal fusion.
Good: Condition is good, with deformation, wrinkling or internal fusion either entirely absent or of such a slight degree as to allow use.

Evaluation of Heat Resistances of Laminated Sheets in Examples 2 to 37 and Comparative Examples 3 to 7

The propylene resin sheet having a tubular shape was cut to a size of 210 mm in the machine direction, and one of the cut sides was heat-sealed (heat-sealing conditions: pressure, 3.4 kgf/cm$^2$; time, 1.5 seconds; temperature, 150°C; using a heat sealer manufactured by Tester Sangyo Co., Ltd.) and formed into a bag shape. Next, the interior was filled with 250 mL of pure water, and the other one of the sides was heat-sealed with a heat sealer. Sealing was carried out such that the distance between the two heat seals was 200 mm. The sample bag thus obtained was placed in a high-temperature, high-pressure cooking sterilization tester (RCS-40 RTGN, manufactured by Hisaka Works, Ltd.), after which pressure was applied and the ambient temperature was raised to and held at 121°C for 30 minutes. This was followed by cooling to about 40°C, whereupon the sample bag was removed from the tester (the sheet (sample bag) which has been subjected to this sterilization treatment is sometimes referred to below as "the heat-treated sheet").
The heat resistance of the heat-treated sheet was evaluated according to the following criteria.
NG: Not fit for use owing to deformation, wrinkling or internal fusion.
Good: Condition is good, with deformation, wrinkling or internal fusion either entirely absent or of such a slight degree as to allow use.

(2) Transparency (Internal Haze):

Following heat treatment, slide glasses were bonded to both sides of the laminated sheet with liquid paraffin, and the transparency was measured with a hazemeter in general accordance with JIS K7136-2000. A smaller value signifies better transparency. A value of 10% or less is good because the contents are easy to check, giving a display effect. The value is preferably 8% or less, and more preferably 7% or less.

(3) Flexibility (Tensile Modulus):

The tensile modulus of the heat-treated laminated sheet was measured under the following conditions in the machine direction (MD) in accordance with JIS K-7127-1989. A smaller value signifies better flexibility. A value of 400 MPa or less is desirable because the bag has a good hand, giving it a sense of quality. The value is preferably 380 MP or less, and more preferably 350 MPa or less.

Sample length: 110 mm
Sample width: 10 mm
Chuck interval: 50 mm
Crosshead speed: 0.5 mm/min

(4) Impact Strength (Units: KJ/m):

The amount of work required for perforation failure per unit sheet thickness was measured using a film impact tester (from Toyo Seiki). Specifically, a laminated sheet following heat treatment was conditioned by being left to stand in a - 25°C environment for at least 24 hours, following which, at - 25°C, the test sheet was attached to a 50 mm diameter holder and struck with a 12.7 mm diameter hemispherical metal perforator. The fragility of the sheet to impact was measured from the work (KJ) required for perforation failure. When the value is at 5 KJ/m or higher, this means that sheet damage can be suppressed even after transportation at an extremely low temperature

(5) Fabricability (Shape-Holding Temperature):

The propylene resin sheet having a tubular shape was cut to a size of 100 mm in the machine direction, one of the cut sides was heat-sealed (heat-sealing conditions: pressure, 3.4 kgf/cm$^2$; time, 1.5 seconds; temperature, 120 to 170°C at 5°C intervals), and the sheet was conditioned for 24 hours in a 23°C, 50% RH atmosphere.

Next, the center portion of the heat-sealed area of the propylene resin sheet was cut out in the machine direction, and the machine direction cross-section was obtained as 20 $\mu$m thick slices with a microtome. The slices were examined under an optical microscope, and the degree of deformation in the heat-sealed area was visually confirmed. In such observation, a temperature at which the degree of deformation abruptly increases (the heat-sealed area becomes extremely thin, or extremely thick areas form at the periphery of the heat-sealed areas) is observed. A temperature 5°C lower than the temperature at which the degree of deformation abruptly increases following heat sealing was treated as the shape-holding temperature. When the shape-holding temperature is at least 140°C, thinning of the heat-sealing area is suppressed, indicating excellent strength retention.

3. Resins Used

(1) Propylene Resin Composition (A) for Inner Layer

Propylene resin compositions PP (A-1) to PP (A-7) obtained by successive polymerization in Production Examples (A-1) to (A-7) below, and propylene resin compositions PP (A-8) and PP (A-9) obtained by blending were used.

Production Example (A-1): Production of PP (A-1)

(i) Preparation of Prepolymerization Catalyst

Chemical Treatment of Silicate

A 10-liter glass separable flask equipped with a stirrer was slowly charged with 3.75 liters of distilled water, followed by 2.5 kg of concentrated sulfuric acid (96%). In addition, 1 kg of montmorillonite (Benclay SL, available from Mizusawa Industrial Chemicals, Ltd.; average particle size = 25 $\mu$m; particle size distribution = 10 to 60 $\mu$m) was dispersed at 50°C, following which the temperature was raised to 90°C and the flask was maintained at that temperature for 6.5 hours. After cooling to 50°C, the slurry was vacuum filtered and the cake was collected. Next, 7 liters of distilled water was added to the cake to as to reconstitute the slurry, which was then filtered. This washing operation was carried out until the pH of the wash fluid (filtrate) exceeded 3.5. The recovered cake was dried overnight in a nitrogen atmosphere at 110°C. The weight after drying was 707 g.

Drying of Silicate

The chemically treated silicate was dried in a kiln dryer. The specifications and drying conditions were as follows. Rotary cylinder: drum-shaped, inside diameter of 50 mm, heating zone of 550 mm (electric furnace), and with lifting flights

> Speed: 2 rpm
> Inclination: 20/520
> Silicate feed rate: 2.5 g/min
> Gas flow rate: nitrogen, 96 L/hour
> Countercurrent drying temperature: 200°C (powder temperature)

Preparation of Catalyst

An autoclave having a capacity of 16 liters and equipped with a stirrer and a temperature regulator was thoroughly flushed with nitrogen. The autoclave was then charged with 200 g of dried silicate, following which 1160 mL of mixed heptane and 840 mL of a heptane solution of triethylaluminum (0.60 M) were added and the autoclave contents were stirred at room temperature. One hour later, washing with mixed heptane was carried out, thereby preparing 2000 mL of a silicate slurry. Next, 9.6 mL of a heptane solution of triisobutylaluminum (0.71 M/L) was added to the silicate slurry prepared as described above, and reacted at 25°C for 1 hour. In a separate procedure, 33.1 mL of a heptane solution of triisobutylaluminum (0.71 M) was added to 2180 mg (0.3 mM) of (r)-dichloro[1,1'-dimethylsilylenebis{2-methyl-4-(4-chlorophenyl)-4H-azulenyl}] zirconium and 870 mL of mixed heptane, and reacted at room temperature for 1 hour. The resulting mixture was added to the silicate slurry and stirred for 1 hour, following which additional mixed heptane was added, bringing the volume up to 5000 mL.

Prepolymerization/Washing

Next, the temperature within the reactor was raised to 40°C. Once the temperature had stabilized, propylene was fed in at a rate of 100 g/hour and the temperature was maintained. The supply of propylene was stopped after 4 hours, and the temperature was maintained for another 2 hours.

After the completion of prepolymerization, the remaining monomer was purged, stirring was stopped and the system was left at rest for about 10 minutes, following which 2400 mL of supernatant was decanted. Next, 9.5 mL of a heptane solution of triisobutylaluminum (0.71 M/L) and 5600 mL of mixed heptane were added, stirring was carried out at 40°C for 30 minutes, and the system was left at rest for 10 minutes, following which 5600 mL of supernatant was removed. These operations were repeated another three times. An ingredient analysis of the final supernatant was carried out, whereupon the concentration of the organoaluminum ingredient was 1.23 mM/L and the zirconium concentration was $8.6 \times 10^{-6}$ g/L. Hence, the amount present in the supernatant relative to the amount charged was 0.016%. Next, 170 mL of a heptane solution of triisobutylaluminum (0.71 M/L) was added, following which vacuum drying was carried out at 45°C. This operation yielded a prepolymerization catalyst containing 2.0 g of polypropylene per gram of solid catalyst component.

Using this prepolymerization catalyst, the production of a propylene resin composition was carried out according to the procedure described below.

(ii) First Polymerization Step

A horizontal reactor (L/D = 6; capacity, 100 liters) equipped with stirring blades was thoroughly dried, and the interior was thoroughly flushed with nitrogen gas. In the presence of a polypropylene powder bed and while stirring at a speed of 30 rpm, 0.568 g/hr of the prepolymerization catalyst prepared by the above-described method and 15.0 mmol/hr of triisobutylaluminum were continuously fed to the upstream portion of the reactor. Vapor phase polymerization was carried out by continuously passing a monomer mixed gas into the reactor in such a way as to give an ethylene/propylene molar ratio of 0.07 in the vapor phase portion within the reactor and to set the hydrogen concentration at 100 ppm, while holding the reactor temperature at 65°C and the pressure at 2.1 MPaG. The polymer powder formed by the reaction was continuously removed from the downstream portion of the reactor in such manner as to keep the size of the powder bed within the reactor constant. At this time, the polymer removal rate, on reaching a steady state, was 10.0 kg/hr.

Upon analysis, the propylene-ethylene random copolymer obtained in the first polymerization step was found to have a MFR of 6.0 g/10 min and an ethylene content of 2.2 wt%.

(iii) Second Polymerization Step

The propylene-ethylene copolymer removed from the first step was continuously fed to a horizontal reactor equipped with stirring blades (L/D = 6; capacity, 100 liters). Vapor-phase polymerization was carried out by continuously passing a monomer mixed gas into the reactor in such a way as to give an ethylene/propylene molar ratio of 0.453 in the vapor phase portion within the reactor and to set the hydrogen concentration at 330 ppm, while stirring at a rate of 25 rpm and while holding the reactor temperature at 70°C and the pressure at 2.0 MPaG. The polymer powder formed by the reaction was continuously removed from the downstream portion of the reactor in such manner as to keep the size of the powder bed within the reactor constant. Oxygen was supplied as an activity suppressor so as to set the polymer removal rate at this time to 17.9 kg/hr, thereby controlling the polymerization reaction rate in the second polymerization step. The activity was 31.429 kg/g of catalyst.

Analytical results for the resulting propylene resin composition PP (A-1) are shown in Table 3.

Granulation

In addition, 0.05 parts by weight of Antioxidant 1 below and 0.05 parts by weight of Antioxidant 2 below were added to the propylene resin PP (A-1) obtained above and thoroughly stirred and mixed, then melt-blended in a PCM twin-screw extruder (screw bore, 30 mm; manufactured by Ikegai Seisakusho) at a screw speed of 200 rpm, a discharge rate of 10 kg/hr and an extruder temperature of 200°C. The molten resin extruded from the strand die was taken up while being cooled and solidified in a cooling water tank. Using a strand cutter, the strand was cut to a diameter of about 2 mm and a length of about 3 mm, giving the propylene resin composition PP (A-1).
Antioxidant 1: Tetrakis[methylene-3-(3',5'-di-t-butyl-4'-hydroxyphenyl)propionate]methane (available from Ciba Specialty Chemicals under the trade name Irganox 1010) Antioxidant 2: Tris(2,4-di-t-butylphenyl)phosphate (available from Ciba Specialty Chemicals under the trade name Irganox 168)

Production Examples (A-2) to (A-7): Production of PP (A-2) to PP (A-7)

Aside from suitably changing the hydrogen concentration, ethylene/propylene feed ratio, polymerization pressure and polymerization temperature, catalyst preparation, polymerization, analysis and granulation were carried out by the same methods as in Production Example (A-1).

Production Example (A-8)

Use was made of a blend obtained by the mixture in a twin-screw extruder of: as component (A1), 56 wt% of the propylene-ethylene random copolymer WINTEC WFW4 (available under this trade name from Japan Polypropylene Corporation; MFR, 7; melting point, 135°C) produced with a metallocene catalyst; and, as component (A2), 44 wt% of the propylene-ethylene random copolymer VISTAMAXX 3000 (available under this trade name from Exxon-Mobil Chemical; MFR, 8; ethylene content, 11 wt%) produced with a metallocene catalyst.

Production Example (A-9)

Use was made of a blend obtained by the mixture in a twin-screw extruder of: as component (A1), 56 wt% of the propylene-ethylene random copolymer WINTEC WFW4 (available under this trade name from Japan Polypropylene Corporation; MFR, 7; melting point, 135°C) produced with a metallocene catalyst; and, as component (A2), 22 wt% of the propylene-ethylene random copolymer VISTAMAXX 3000 (available under this trade name from Exxon-Mobil Chemical; MFR, 8; ethylene content, 11 wt%) produced with a metallocene catalyst and 22 wt% of the propylene-ethylene random copolymer VISTAMAXX 6102 (available under this trade name from Exxon-Mobil Chemical; MFR, 3; ethylene content, 16 wt%) produced with a metallocene catalyst.
The various analytical results for the resulting propylene resin compositions (A-2) to (A-9) are shown in Table 3. Of these, (A-2), (A-4) to (A-6) and (A-9) satisfy the conditions of the invention, whereas (A-1), (A-3), (A-7) and (A-8) do not satisfy the conditions of the invention.

Table 3

|  |  | A-1 | A-2 | A-3 | A-4 | A-5 | A-6 | A-7 | A-8 | A-9 |
|---|---|---|---|---|---|---|---|---|---|---|
| MFR | MFR of PP resin composition (A) (g/10 min) | 6 | 6 | 6 | 6 | 6 | 6 | 6 | 7 | 7 |
| W (A1) | Ratio of component (A1) (wt%) | 56 | 63 | 63 | 56 | 56 | 70 | 56 | 56 | 56 |
| $\alpha$ (A1) | Ethylene content in component (A1) (wt%) | 2.2 | 1.9 | 1.9 | 2 | 1.9 | 1.9 | 1.9 | 1.9 | 1.9 |
| MFR (A1) | MFR of component (A1) (g/10 min) | 6 | 6 | 6 | 6 | 6 | 6 | 6 | 7 | 7 |

(continued)

| | | A-1 | A-2 | A-3 | A-4 | A-5 | A-6 | A-7 | A-8 | A-9 |
|---|---|---|---|---|---|---|---|---|---|---|
| W(A2) | Ratio of component (A2) (wt%) | 44 | 37 | 37 | 44 | 44 | 30 | 44 | 44 | 44 |
| α (A2) | Ethylene content in component (A2) (wt%) | 11 | 14.3 | 22 | 13.3 | 13 | 14.3 | 16.8 | 11 | 13.5 |
| Tm (A1) | Melting peak temperature (°C) | 130 | 133 | 133 | 130 | 131 | 133 | 133 | 135 | 135 |
| Tg of water-cooled blown-film extruded sheet | Glass transition point (°C) | -16.7 | -13.3 | -8.2 -25.5 | -11.7 | -11.8 | -13.2 | -1.8 -28.8 | -5.8 | -5.9 |
| Tg of press-molded sheet | Glass transition point (°C) | -15.9 | -4.3 -25.8 | -1.9 -34.8 | broad peak (-24 to -3) | broad peak (-20 to -3) | -4.0 -25.5 | -4.8 -28.9 | -8.8 | -5.9 -23.8 |

(2) Ethylene-α-Olefin Copolymer (B) for Inner Layer

Resins PE (B-1) to PE (B-3) obtained in Production Examples (B-1) to (B-3) below, and the commercially available products PE (B-4) to PE (B-8) that are subsequently described were used.

Production Example (B-1)

A copolymer of ethylene and 1-hexene was produced. Catalyst preparation was carried out by the method described under "Preparation of Catalyst System" in the working examples of Japanese Translation of PCT Application No. H7-508545. That is, a catalyst solution was prepared by adding to 2.0 mmol of the complex dimethylsilylenebis(4,5,6,7-tetrahydroindenyl)hafnium dimethyl an equimolar amount of tripentafluorophenylboron, then diluting to 10 liters with toluene.
A mixture of ethylene and 1-hexene was fed to a stirring autoclave-type continuous reactor having a capacity of 1.5 liters in such a way as to set the 1-hexene content to 73 wt%, and the reaction was carried out at 127°C while maintaining the pressure inside the reactor at 130 MPa. The amount of polymer produced per hour was about 2.5 kg.
Following reaction completion, various analyses were carried out on the resulting polymer. Analytical results for the ethylene-α-olefin copolymer (B-1) thus obtained are shown in Table 4.

Production Examples B-2 and B-3

Aside from changing the amount of 1-hexene included during polymerization and the polymerization temperature as shown in Table 4, catalyst preparation and polymerization were carried out by the same method as in Production Example PE (B-1).
Following reaction completion, various analyses were carried out on the resulting polymer.
The commercial products used were as follows.

(B-4): The commercial product TAFMER A-1085S available under this trade name from Mitsui Chemicals (an ethylene-α-olefin copolymer prepared with a metallocene catalyst)
(B-5): The commercial product TAFMER A-4085S available under this trade name from Mitsui Chemicals (an ethylene-α-olefin copolymer prepared with a metallocene catalyst)
(B-6): The commercial product ENGAGE EG 8003 available under this trade name from Dow Chemical (an ethylene-α-olefin copolymer prepared with a metallocene catalyst)
(B-7): The commercial product KERNEL KF 283 available under this trade name from Japan Polyethylene Corporation (an ethylene-α-olefin copolymer prepared with a metallocene catalyst)

(B-8): The commercial product KERNEL KJ 640T available under this trade name from Japan Polyethylene Corporation (an ethylene-α-olefin copolymer prepared with a metallocene catalyst)

Analytical results for the PE (B-1) to PE (B-8) are shown in Table 4. PE (B-1) to PE (B-6) satisfy the conditions of the invention as component (B).

On the other hand, PE (B-7) and PE (B-8) do not satisfy the conditions of the invention as component (B).

Table 4

| Production Example | | B-1 | B-2 | B-3 | B-4 | B-5 | B-6 | B-7 | B-8 |
|---|---|---|---|---|---|---|---|---|---|
| Ethylene-α-olefin copolymer (B) | | PE (B-1) | PE (B-2) | PE (B-3) | PE (B-4) | PE (B-5) | PE (B-6) | PE (B-7) | PE (B-8) |
| Grade | | -- | -- | -- | A-1085S | A-4085S | EG 8003 | KF 283 | KJ 640T |
| Production conditions | 1-Hexene content (wt%) | 73 | 78 | 62 | -- | -- | -- | -- | -- |
| | Pressure (MPa) | 130 | 130 | 130 | -- | -- | -- | -- | -- |
| | Temperature (°C) | 127 | 118 | 140 | -- | -- | -- | -- | -- |
| Analytic Results | Density (g/cc) | 0.880 | 0.865 | 0.898 | 0.885 | 0.885 | 0.885 | 0.921 | 0.880 |
| | MFR (B) (g/10 min) | 3.5 | 3.5 | 3.5 | 1.2 | 3.6 | 1 | 2.5 | 30 |

(3) Propylene Resin (C) for Inner Layer

The commercially available products PP (C-1) and PP (C-2) described below and propylene resins PP (C-3) to PP (C-4) obtained in Production Examples (C-3) and (C-4) below were used.

PP (C-1): The commercial product NOVATEC PP MA3 available under this trade name from Japan Polypropylene Corporation (propylene homopolymer; MFR, 11; melting point, 163°C)

PP (C-2): The commercial product NOVATEC PP FY6H available under this trade name from Japan Polypropylene Corporation (propylene homopolymer; MFR, 2; melting point, 167°C)

Production Example C-3

(i) Production of Solid Component Catalyst

A nitrogen-flushed 50 L reactor equipped with a stirrer was charged with 20 liters of dehydrated and deoxygenated n-heptane, then 4 moles of magnesium chloride and 8 moles of tetrabutoxytitanium were added and the reactor contents were reacted at 95°C for 2 hours. The temperature was subsequently lowered to 40°C, 480 mL of methylhydropolysiloxane (20 centistokes) was added, and the contents were again reacted for 3 hours, following which the reaction mixture was removed and the solid component that had formed was washed with n-heptane.

Next, 15 liters of dehydrated and deoxygenated n-heptane was charged into the same type of reactor with stirrer as described above, following which the solid components were added in an amount equivalent to 3 moles of magnesium atoms. A mixture of 8 moles of silicon tetrachloride added to 25 mL of n-heptane was then introduced at 30°C over a period of 30 minutes, the temperature was raised to 90°C, and the reactor contents were reacted for 1 hour, following which the reaction mixture was removed and the solid component that had formed was washed with n-heptane.

In addition, 5 liters of dehydrated and deoxygenated n-heptane was charged into the same type of reactor with stirrer as described above, following which 250 g of the silicon tetrachloride-treated titanium-containing solid component obtained above, 750 g of 1,5-hexadiene, 130 mL of t-butylmethyldimethoxysilane, 10 mL of divinyldimethylsilane and 225 g of triethylaluminum were each added, and reaction was effected at 30°C for 2 hours. The reaction mixture was subsequently removed and washed with n-heptane, giving a solid component catalyst.

In the resulting solid component catalyst, the amount of 1,5-hexadiene prepolymer was 2.97 g per gram of the titanium-containing solid component.

(ii) Two-Stage Polymerization of Propylene/Propylene-Ethylene

Propylene, triethylaluminum, and an amount of the above solid component catalyst which sets the polymer-forming rate at 20 kg/hour were continuously fed into a first-stage reactor having a capacity of 550 liters at a temperature of 70°C and under an applied pressure (about 3.2 MPa at 70°C). In addition, hydrogen was continuously fed as a molecular weight adjusting agent, and first-stage polymerization was carried out in a liquid phase.

Next, the polymer that had formed was charged, through a propylene purging tank, into a second-stage reactor having a capacity of 1900 liters, and propylene and ethylene in amounts corresponding to the compositional ratio of the target copolymer were continuously fed in at a temperature of 60°C to a pressure of 3.0 MPa. In addition, hydrogen was continuously fed in as a molecular weight adjusting agent, and an active hydrogen compound (ethanol) was fed in an amount of 200 moles per mole of titanium atoms in the solid component catalyst supplied in the first stage and in an amount of 2.5 moles per mole of triethylaluminum, whereupon polymerization was carried out in a vapor phase. The polymer that formed was continuously transferred to a vessel, following which moisture-containing nitrogen gas was introduced, thereby stopping the reaction (second-stage polymerization).

Granulation

0.05 parts by weight of Antioxidant 1 below, 0.05 parts by weight of Antioxidant 2 below and 0.02 parts by weight of the neutralizing agent 1 were added to 100 parts by weight of the propylene resin PP (C-3) obtained above and thoroughly stirred and mixed, then melt-blended in a PCM twin-screw extruder (screw bore, 30 mm; manufactured by Ikegai Seisakusho) at a screw speed of 200 rpm, a discharge rate of 10 kg/hr and an extruder temperature of 200°C. The molten resin extruded from the strand die was taken up while being cooled and solidified in a cooling water tank. Using a strand cutter, the strand was cut to a diameter of about 2 mm and a length of about 3 mm, giving a propylene resin composition PP(C-3).

Antioxidant 1: Tetrakis[methylene-3-(3',5'-di-t-butyl-4'-hydroxyphenyl)propionate]methane (available from Chiba Specialty Chemicals under the trade name Irganox 1010) Antioxidant 2: Tris(2,4-di-t-butylphenyl)phosphate (available from Chiba Specialty Chemicals under the trade name Irganox 168)
Neutralizing Agent 1: Magnesium aluminum hydroxide carbonate hydrate, available from Kyowa Chemical Industry Co., Ltd. under the trade name DHT-4A

Production Example C-4

A propylene resin powder having an ethylene content of 20 wt% was obtained by carrying out the same operations as in the method described in Example 1 in Japanese Patent No. 4389307.

Granulation

Next, 0.05 parts by weight of above Antioxidant 1, 0.05 parts by weight of above Antioxidant 2, 0.02 parts by weight of above Neutralizing Agent 1 and 0.018 parts by weight of Organic Peroxide 1 below were added to 100 parts by weight of the resulting propylene resin PP (C-4), thoroughly stirred and mixed, then melt-blended in a PCM twin-screw extruder (screw bore, 30 mm; manufactured by Ikegai Seisakusho) at a screw speed of 200 rpm, a discharge rate of 10 kg/hr and an extruder temperature of 200°C. The molten resin extruded from the strand die was taken up while being cooled and solidified in a cooling water tank. Using a strand cutter, the strand was cut to a diameter of about 2 mm and a length of about 3 mm, giving a propylene resin composition PP (C-4).
Organic Peroxide 1: 2,5-dimethyl-2,5-di(t-butylperoxy)hexane, available from NOF Corporation under the trade name PERHEXA 25B

Analytical results for PP (C-1) to PP (C-4) are shown in Table 5.

Table 5

| Production Example | (C-1) | (C-2) | C-3 | C-4 |
|---|---|---|---|---|
| Propylene resin (C) | PP (C-1) | PP (C-2) | PP (C-3) | PP (C-4) |
| Grade | MA3 | FY6H | -- | -- |

(continued)

| Production Example | | (C-1) | (C-2) | C-3 | C-4 |
|---|---|---|---|---|---|
| Analytic results | Tm (C) (°C) | 163 | 167 | 162 | 157 |
| | MFR (C) (g/10 min) | 11 | 2 | 7 | 6 |
| | Elastomer content (wt%) | -- | -- | 57 | 35 |
| | Ethylene content in elastomer (wt%) | -- | -- | 17 | 20 |

(4) Other Components of Inner Layer

Styrene-Based Elastomer

The product available under the trade name Kraton G 1645MO from Kraton was used.
This is denoted in the subsequent tables as "StEL."

(5) Propylene Resin (D) for Outer Layer

The commercially available propylene resin PP (D-1) described below and propylene resins PP (D-2) and PP (D-3) obtained in Production Examples (D-2) and (D-3) below were used.
PP (D-1): The commercial product NOVATEC PP MA3 available under this trade name from Japan Polypropylene Corporation (propylene homopolymer; MFR, 11; melting point, 163°C)

Production Example D-2

A propylene resin powder having an ethylene content of 20 wt% was obtained by carrying out the same operations as in the method described in Example 1 in Japanese Patent No. 4389307.

Granulation

Next, 0.05 parts by weight of above Antioxidant 1, 0.05 parts by weight of above Antioxidant 2, 0.02 parts by weight of above Neutralizing Agent 1 and 0.018 parts by weight of above Organic Peroxide 1 were added to 100 parts by weight of the resulting propylene resin PP (D-2), thoroughly stirred and mixed, then melt-blended in a PCM twin-screw extruder (screw bore, 30 mm; manufactured by Ikegai Seisakusho) at a screw speed of 200 rpm, a discharge rate of 10 kg/hr and an extruder temperature of 200°C. The molten resin extruded from the strand die was taken up while being cooled and solidified in a cooling water tank. Using a strand cutter, the strand was cut to a diameter of about 2 mm and a length of about 3 mm, giving a propylene resin composition PP (D-2).

Production Example D-3

(i) Production of Solid Component Catalyst

A nitrogen-flushed 50 L reactor equipped with a stirrer was charged with 20 liters of dehydrated and deoxygenated n-heptane, then 4 moles of magnesium chloride and 8 moles of tetrabutoxytitanium were added and the reactor contents were reacted at 95°C for 2 hours. The temperature was subsequently lowered to 40°C, 480 mL of methylhydropolysiloxane (20 centistokes) was added, and the contents were again reacted for another 3 hours, following which the reaction mixture was removed and the solid component that had formed was washed with n-heptane.
Next, 15 liters of dehydrated and deoxygenated n-heptane was charged into the same type of reactor with stirrer as described above, following which the solid components were added in an amount equivalent to 3 moles of magnesium atoms. A mixture of 8 moles of silicon tetrachloride added to 25 mL of n-heptane was then introduced at 30°C over a period of 30 minutes, the temperature was raised to 90°C, and the reactor contents were reacted for 1 hour, following which the reaction mixture was removed and the solid component that had formed was washed with n-heptane.
In addition, 5 liters of dehydrated and deoxygenated n-heptane was charged into the same type of reactor with stirrer as described above, following which 250 g of the silicon tetrachloride-treated titanium-containing solid component obtained above, 750 g of 1,5-hexadiene, 130 mL of t-butylmethyldimethoxysilane, 10 mL of divinyldimethylsilane and 225 g of triethylaluminum were each added, and reaction was effected at 30°C for 2 hours. The reaction mixture was subsequently removed and washed with n-heptane, giving a solid component catalyst.

In the resulting solid component catalyst, the amount of 1,5-hexadiene prepolymer was 2.97 g per gram of the titanium-containing solid component.

(ii) Two-Stage Polymerization of Propylene/Propylene-Ethylene

Propylene, triethylaluminum, and an amount of the above solid component catalyst which sets the polymer-forming rate at 20 kg/hour were continuously fed into a first-stage reactor having a capacity of 550 liters at a temperature of 70°C and under an applied pressure (about 3.2 MPa at 70°C). In addition, hydrogen was continuously fed as a molecular weight adjusting agent, and first-stage polymerization was carried out in a liquid phase.

Next, the polymer that had formed was charged, through a propylene purging tank, into a second-stage reactor having a capacity of 1900 liters, and propylene and ethylene in amounts corresponding to the compositional ratio of the target copolymer were continuously fed in at a temperature of 60°C to a pressure of 3.0 MPa. In addition, hydrogen was continuously fed in as a molecular weight adjusting agent, and an active hydrogen compound (ethanol) was fed in an amount of 200 moles per mole of titanium atoms in the solid component catalyst supplied in the first stage and in an amount of 2.5 moles per mole of triethylaluminum, whereupon polymerization was carried out in a vapor phase. The polymer that formed was continuously transferred to a vessel, following which moisture-containing nitrogen gas was introduced, thereby stopping the reaction (second-stage polymerization).

Next, 0.05 parts by weight of above Antioxidant 1, 0.05 parts by weight of above Antioxidant 2, and 0.02 parts by weight of above Neutralizing Agent 1 were added to 100 parts by weight of the resulting propylene resin PP (D-3), thoroughly stirred and mixed, then melt-blended in a PCM twinscrew extruder (screw bore, 30 mm; manufactured by Ikegai Seisakusho) at a screw speed of 200 rpm, a discharge rate of 10 kg/hr and an extruder temperature of 200°C. The molten resin extruded from the strand die was taken up while being cooled and solidified in a cooling water tank. Using a strand cutter, the strand was cut to a diameter of about 2 mm and a length of about 3 mm, giving a propylene resin composition PP (D-3).

Analytical results for PP (D-1) to PP (D-3) are shown in Table 6.

Table 6

| Production Example | | (D-1) | D-2 | D-3 |
|---|---|---|---|---|
| Propylene resin (D) | | PP (D-1) | pp (D-2) | PP (D-3) |
| Grade | | MA3 | -- | -- |
| Analytic results | Tm (C) (°C) | 163 | 157 | 162 |
| | MFR (C) (g/10 min) | 11 | 6 | 7 |
| | Elastomer content (wt%) | -- | 35 | 57 |
| | Ethylene content in elastomer (wt%) | -- | 20 | 17 |

(6) Ethylene-α-Olefin Copolymer PE (D3) for Outer Layer

The ethylene resin PE (D3-1) obtained in Production Example (D3-1) below was used.

Production Example (D3-1)

A copolymer of ethylene and 1-hexene was produced. Catalyst preparation was carried out by the method described in Examples in Japanese Translation of PCT Application No. H7-508545 (preparation of catalyst system). That is, a catalyst solution was prepared by adding to 2.0 mmol of the complex dimethylsilylenebis(4,5,6,7-tetrahydroindenyl)hafnium dimethyl an equimolar amount of tripentafluorophenylboron, then diluting to 10 liters with toluene.

A mixture of ethylene and 1-hexene was fed to a stirring autoclave-type continuous reactor having a capacity of 1.5 liters in such a way as to set the 1-hexene content to 73 wt%, and the reaction was carried out at 127°C while maintaining the pressure inside the reactor at 130 MPa. The amount of polymer produced per hour was about 2.5 kg.

Following reaction completion, various analyses were carried out on the resulting polymer. Analytical results for the ethylene-α-olefin copolymer PE (D3-1) obtained are shown in Table 7.

Table 7

| Production Example | | D3-1 |
|---|---|---|
| Ethylene-α-olefin copolymer (D3) | | PE (D3-1) |
| Grade | | -- |
| Production conditions | 1-Hexene content (wt%) | 73 |
| | Pressure (MPa) | 130 |
| | Temperature (°C) | 127 |
| Analytic results | Density (g/cc) | 0.880 |
| | MFR (B) (g/10 min) | 3.5 |

(7) Other Components for Outer Layer

The commercially available styrene-based elastomer available from Kraton under the trade name Kraton G 1645MO was used.

(8) Propylene Resin Composition (Z) for Innermost Layer

The following propylene resin compositions (Z-1) to (Z-8) obtained with commercially available propylene resins and other ingredients were used.
Propylene Resin Composition (Z-1): A composition of 85 wt% of the propylene-ethylene random copolymer WINTEC WFW4 (available under this trade name from Japan Polypropylene Corporation; MFR, 7; melting point, 135°C) prepared with a metallocene catalyst, and 15 wt% of the above ethylene-α-olefin copolymer (B-1).
Propylene Resin Composition (Z-2): A composition of 75 wt% of the above propylene resin composition (A-4), 20 wt% of the above ethylene-α-olefin copolymer (B-1), and 5 wt% of the above propylene homopolymer (C-1).
Propylene Resin Composition (Z-3): A composition of 40 wt% of the above propylene resin composition (A-1), 40 wt% of the propylene-ethylene random copolymer WINTEC WFX4 (available under this trade name from Japan Polypropylene Corporation; MFR, 7; melting point, 125°C) prepared with a metallocene catalyst, and 20 wt% of the above ethylene-α-olefin copolymer (B-1).

Propylene Resin Composition (Z-4): A composition of 40 wt% of the propylene-ethylene random copolymer WINTEC WFW4 (available under this trade name from Japan Polypropylene Corporation; MFR, 7; melting point, 135°C) prepared with a metallocene catalyst, 40 wt% of the propylene-ethylene random copolymer WINTEC WFX4 (available under this trade name from Japan Polypropylene Corporation; MFR, 7; melting point, 125°C) prepared with a metallocene catalyst, and 20 wt% of the above ethylene-α-olefin copolymer (B-1).
Propylene Resin Composition (Z-5): A composition of 40 wt% of the propylene-ethylene random copolymer WINTEC WFW4 (available under this trade name from Japan Polypropylene Corporation; MFR, 7; melting point, 135°C) prepared with a metallocene catalyst, 40 wt% of the propylene-ethylene random copolymer WINTEC WFX4 (available under this trade name from Japan Polypropylene Corporation; MFR, 7; melting point, 125°C) prepared with a metallocene catalyst, and 20 wt% of the styrene-based elastomer KRATON G 1657MS (available under this trade name from Kraton).

Propylene Resin Composition (Z-6): A composition of 80 wt% of the above propylene resin composition (A-1), and 20 wt% of the above ethylene-α-olefin copolymer (B-1).
Propylene Resin Composition (Z-7): A composition of 79 wt% of the above propylene resin composition (A-1), 20 wt% of the above ethylene-α-olefin copolymer (B-1), and 1 wt% of the above propylene homopolymer (C-1).
Propylene Resin Composition (Z-8): A composition of 75 wt% of the above propylene resin composition (A-1), 20 wt% of the above ethylene-α-olefin copolymer (B-1), and 5 wt% of the above propylene homopolymer (C-1).
Propylene Resin Composition (Z-9): A composition of 74 wt% of the above propylene resin composition (A-1), 25 wt% of the above ethylene-$\alpha$-olefin copolymer (B-1), and 1 wt% of the above propylene homopolymer (C-1).

Examples 1

Using a single-screw extruder having a 50 mm bore as the inner layer extruder and a single-screw extruder having a bore of 40 mm as the outer layer and innermost layer extruder, feedstock pellets for the various layers indicated in Table 8 below were extruded at a temperature setting of 200°C in the ratios indicated in the tables from a circular die having a mandrel diameter of 100 mm and a lip width of 3.0 mm, water-cooled, and water-cooled blown film extrusion was carried out at a speed of 10 m/min to a lay flat width of 200 mm, thereby giving a 200 $\mu$m thick tubular shaped body in a total thickness of the layer construction as indicated in Table 8.

Next, the resulting tubular shaped body composed of a laminated sheet was heat-treated by the above-described method, and then conditioned for at least 24 hours in a 23°C, 50% RH atmosphere, following which the properties of the laminated sheet were evaluated. The evaluation results are shown in Table 8 below.

The laminated sheets which satisfy the conditions of the invention had an excellent transparency, flexibility, heat resistance, impact resistance, and appearance.

Examples 2 to 37

Using a single-screw extruder having a 30 mm bore as the inner layer extruder and single-screw extruders having a bore of 18 mm as the outer layer extruder and the innermost layer extruder, feedstock pellets for the respective layers in Tables 8 to 13 below were charged into the extruders in the proportions indicated in the tables, extruded at a temperature setting of 200°C from a circular die having a mandrel diameter of 50 mm and a lip width of 1.0 mm, and water-cooled. Water-cooled blown-film extrusion was carried out in this way at a speed of 3 m/min to a lay flat width of 90 mm, thereby giving tubular extrudates having the layer constructions shown in Tables 8 to 13 and a total thickness of 200 $\mu$m.

Next, the resulting tubular extrudates composed of laminated sheets were heat-treated by the above-described method, and then conditioned for at least 24 hours in a 23°C, 50% RH atmosphere, following which the properties of the laminated sheet were evaluated. The evaluation results are shown in Tables 8 to 13 below.

The laminated sheets satisfying the conditions of the invention had excellent transparency, flexibility, heat resistance, impact resistance and appearance.

Table 8

| | | | | Examples | | | | | |
|---|---|---|---|---|---|---|---|---|---|
| | | | | 1 | 2 | 3 | 4 | 5 | 6 |
| Layer structure and formulations | Outer layer (Y) | Component (D) | Type | PP (D-1) | PP (D-1) | PP (D-1) | PP (D-1) | PP (D-1) | PP (D-1) |
| | | | Ratio (wt%) | 100 | 80 | 80 | 80 | 80 | 80 |
| | | Component (D3) | Type | -- | PE (D3-1) | PE (D3-1) | PE (D3-1) | PE (D3-1) | PE (D3-1) |
| | | | Ratio (wt%) | -- | 20 | 20 | 20 | 20 | 20 |
| | | Other components | Type | -- | -- | -- | -- | -- | -- |
| | | | Ratio (wt%) | -- | -- | -- | -- | -- | -- |
| | | Thickness ($\mu$m) | | 20 | 20 | 20 | 20 | 20 | 20 |
| | Inner layer (X) | Component (A) | Type | PP (A-2) | PP (A-4) | PP (A-4) | PP (A-2) | PP (A-5) | PP (A-6) |
| | | | Ratio (wt%) | 65 | 80 | 75 | 75 | 75 | 75 |
| | | Component (B) | Type | PE (B-1) | PE (B-1) | PE (B-1) | PE (B-1) | PE (B-1) | PE (B-1) |
| | | | Ratio (wt%) | 30 | 20 | 20 | 20 | 20 | 20 |
| | | Component (C) | Type | PP (C-1) | -- | PP (C-1) | PP (C-1) | PP (C-1) | PP (C-1) |
| | | | Ratio (wt%) | 5 | -- | 5 | 5 | 5 | 5 |
| | | Other components | Type | -- | -- | -- | -- | -- | -- |
| | | | Ratio (wt%) | -- | -- | -- | -- | -- | -- |
| | | Thickness ($\mu$m) | | 160 | 180 | 180 | 160 | 160 | 160 |
| | Innermost layer (Z) | Type | | Z-1 | -- | -- | Z-2 | Z-2 | Z-2 |
| | | Thickness ($\mu$m) | | 20 | -- | -- | 20 | 20 | 20 |
| | Total thickness ($\mu$m) | | | 200 | 200 | 200 | 200 | 200 | 200 |
| Film properties after heat treatment | Heat resistance | | | good | good | good | good | good | good |
| | Internal haze (%) | | | 4.6 | 6.2 | 6.7 | 6.5 | 6.5 | 6.4 |
| | Tensile modulus (MPa) | | | 295 | 200 | 225 | 300 | 230 | 360 |
| | Impact strength (KJ/m) | | | 6 | 10 | 10 | 10 | 10 | 5 |
| Fabricability | Shape-holding temperature (°C) | | | 145 | 140 | 145 | 145 | 145 | 145 |

Table 9

| | | | | Examples | | | | | |
|---|---|---|---|---|---|---|---|---|---|
| | | | | 7 | 8 | 9 | 10 | 11 | 12 |
| Layer structure and formulations | Outer layer (Y) | Component (D) | Type | PP (D-2) | PP (D-2) | PP (D-2) | PP (D-2) | PP (D-2) | PP (D-2) |
| | | | Ratio (wt%) | 60 | 60 | 60 | 60 | 60 | 60 |
| | | Component (D3) | Type | PE (D3-1) | PE (D3-1) | PE (D3-1) | PE (D3-1) | PE (D3-1) | PE (D3-1) |
| | | | Ratio (wt%) | 10 | 10 | 10 | 10 | 10 | 10 |
| | | Other components | Type | PP (D-1) | PP (D-1) | PP (D-1) | PP (D-1) | PP (D-1) | PP (D-1) |
| | | | Ratio (wt%) | 30 | 30 | 30 | 30 | 30 | 30 |
| | | Thickness ($\mu$m) | | 20 | 20 | 20 | 20 | 20 | 20 |
| | Inner layer (X) | Component (A) | Type | PP (A-4) | PP (A-4) | PP (A-4) | PP (A-4) | PP (A-4) | PP (A-4) |
| | | | Ratio (wt%) | 55 | 55 | 55 | 55 | 55 | 55 |
| | | Component (B) | Type | PE (B-1) | PE (B-2) | PE (B-3) | PE (B-4) | PE (B-5) | PE (B-6) |
| | | | Ratio (wt%) | 20 | 20 | 20 | 20 | 20 | 20 |
| | | Component (C) | Type | PP (C-2) | PP (C-2) | PP (C-2) | PP (C-2) | PP (C-2) | PP (C-2) |
| | | | Ratio (wt%) | 25 | 25 | 25 | 25 | 25 | 25 |
| | | Other components | Type | -- | -- | -- | -- | -- | -- |
| | | | Ratio (wt%) | -- | -- | | -- | -- | -- |
| | | Thickness ($\mu$m) | | 160 | 160 | 160 | 160 | 160 | 160 |
| | Innermost layer (Z) | Type | | Z-3 | Z-3 | Z-3 | Z-3 | Z-3 | Z-3 |
| | | Thickness ($\mu$m) | | 20 | 20 | 20 | 20 | 20 | 20 |
| | Total thickness ($\mu$m) | | | 200 | 200 | 200 | 200 | 200 | 200 |
| Film properties after heat treatment | Heat resistance | | | good | good | good | good | good | good |
| | Internal haze (%) | | | 4.3 | 6.8 | 2.3 | 4.1 | 3.2 | 4.8 |
| | Tensile modulus (MPa) | | | 305 | 300 | 320 | 295 | 297 | 295 |
| | Impact strength (KJ/m) | | | 10 | 10 | 7 | 10 | 10 | 10 |
| Fabricability | Shape-holding temperature (°C) | | | 155 | 155 | 155 | 155 | 155 | 155 |

Table 10

| Examples | | | | Examples | | | | | |
|---|---|---|---|---|---|---|---|---|---|
| | | | | 13 | 14 | 15 | 16 | 17 | 18 |
| Layer structure and formulations | Outer layer (Y) | Component (D) | Type | PP (D-2) | PP (D-2) | PP (D-2) | PP (D-2) | PP (D-2) | PP (D-2) |
| | | | Ratio (wt%) | 60 | 60 | 60 | 60 | 60 | 60 |
| | | Component (D3) | Type | PE (D3-1) | PE (D3-1) | PE (D3-1) | PE (D3-1) | PE (D3-1) | PE (D3-1) |
| | | | Ratio (wt%) | 10 | 10 | 10 | 10 | 10 | 10 |
| | | Other components | Type | PP (D-1) | PP (D-1) | PP (D-1) | PP (D-1) | PP (D-1) | PP (D-1) |
| | | | Ratio (wt%) | 30 | 30 | 30 | 30 | 3-0 | 30 |
| | | Thickness | ($\mu$m) | 20 | 20 | 20 | 20 | 20 | 20 |
| | Inner layer (X) | Component (A) | Type | PP (A-4) | PP (A-4) | PP (A-4) | PP (A-4) | PP (A-4) | PP (A-4) |
| | | | Ratio (wt%) | 50 | 45 | 55 | 60 | 50 | 40 |
| | | Component (B) | Type | PE (B-1) | PE (B-1) | PE (B-1) | PE (B-1) | PE (B-1) | PE (B-1) |
| | | | Ratio (wt%) | 25 | 30 | 10 | 20 | 20 | 20 |
| | | Component (C) | Type | PP (C-2) | PP (C-2) | PP (C-2) | PP (C-2) | PP (C-2) | PP (C-2) |
| | | | Ratio (wt%) | 25 | 25 | 25 | 20 | 30 | 40 |
| | | Other components | Type | -- | -- | StEL | -- | -- | -- |
| | | | Ratio (wt%) | -- | -- | 10 | -- | -- | -- |
| | | Thickness ($\mu$m) | | 160 | 160 | 160 | 160 | 160 | 160 |
| | Innermost layer (Z) | Type | | Z-2 | Z-2 | Z-3 | Z-2 | Z-2 | Z-2 |
| | | Thickness ($\mu$m) | | 20 | 20 | 20 | 20 | 20 | 20 |
| | Total thickness ($\mu$m) | | | 200 | 200 | 200 | 200 | 200 | 200 |
| Film properties after heat treatment | Heat resistance | | | good | good | good | good | good | good |
| | Internal haze (%) | | | 4.1 | 4.3 | 2.7 | 4.3 | 3.9 | 5.2 |
| | Tensile modulus (MPa) | | | 300 | 294 | 240 | 260 | 340 | 390 |
| | Impact strength (KJ/m) | | | 10 | 10 | 10 | 10 | 7 | 6 |
| Fabricability | Shape-holding temperature (°C) | | | 155 | 155 | 155 | 150 | 155 | 155 |

Table 11

| | | | | Examples | | | | | |
|---|---|---|---|---|---|---|---|---|---|
| | | | | 19 | 20 | 21 | 22 | 23 | 24 |
| Layer structure and formulations | Outer layer (Y) | Component (D) | Type | PP (D-2) | PP (D-2) | PP (D-2) | PP (D-1) | PP (D-1) | PP (D-1) |
| | | | Ratio (wt%) | 60 | 60 | 60 | 70 | 82 | 87 |
| | | Component (D3) | Type | PE (D3-1) | PE (D3-1) | PE (D3-1) | PE (D3-1) | PE (D3-1) | PE (D3-1) |
| | | | Ratio (wt%) | 10 | 10 | 10 | 9 | 9 | 9 |
| | | Other components | Type | PP (D-1) | PP (D-1) | PP (D-1) | PP (A-1) | PP (A-1) | PP (A-1) |
| | | | Ratio (wt%) | 30 | 30 | 30 | 21 | 9 | 4 |
| | | Thickness (μm) | | 20 | 20 | 20 | 20 | 20 | 20 |
| | Inner layer (X) | Component (A) | Type | PP (A-4) | PP (A-4) | PP (A-4) | PP (A-4) | PP (A-4) | PP (A-4) |
| | | | Ratio (wt%) | 55 | 65 | 65 | 55 | 55 | 55 |
| | | Component (B) | Type | PE (B-1) | PE (B-1) | PE (B-1) | PE (B-1) | PE (B-1) | PE (B-1) |
| | | | Ratio (wt%) | 20 | 20 | 20 | 20 | 20 | 20 |
| | | Component (C) | Type | PP (C-1) | PP (C-3) | PP (C-4) | PP (C-2) | PP (C-2) | PP (C-2) |
| | | | Ratio (wt%) | 25 | 15 | 15 | 25 | 25 | 25 |
| | | Other components | Type | -- | -- | -- | -- | -- | -- |
| | | | Ratio (wt%) | -- | -- | -- | -- | -- | -- |
| | | Thickness (μm) | | 160 | 160 | 160 | 160 | 160 | 160 |
| | Innermost layer (Z) | Type | | Z-2 | Z-2 | Z-2 | Z-3 | Z-3 | Z-3 |
| | | Thickness (μm) | | 20 | 20 | 20 | 20 | 20 | 20 |
| | Total thickness (μm) | | | 200 | 200 | 200 | 200 | 200 | 200 |
| Film properties after heat treatment | Heat resistance | | | good | good | good | good | good | good |
| | Internal haze (%) | | | 5.2 | 4.8 | 4.5 | 3.9 | 4.2 | 4 |
| | Tensile modulus (MPa) | | | 300 | 210 | 200 | 350 | 340 | 350 |
| | Impact strength (KJ/m) | | | 7 | 10 | 10 | 5 | 7 | 6 |
| Fabricability | Shape-holding temperature (°C) | | | 155 | 145 | 145 | 155 | 155 | 155 |

Table 12

| | | | | Examples | | | | | |
|---|---|---|---|---|---|---|---|---|---|
| | | | | 25 | 26 | 27 | 28 | 29 | 30 |
| Layer structure and formulations | Outer layer (Y) | Component (D) | Type | PP (D-3) | PP (D-2) | PP (D-2) | PP (D-1) | PP (D-1) | PP (D-1) |
| | | | Ratio (wt%) | 44 | 90 | 30 | 90 | 80 | 70 |
| | | Component (D3) | Type | -- | PE (D3-1) | PE (D3-1) | -- | -- | -- |
| | | | Ratio (wt%) | -- | 10 | 10 | -- | -- | -- |
| | | Other components | Type | PP (D-1) | -- | PP (D-1) | StEL | StEL | StEL |
| | | | Ratio (wt%) | 56 | -- | 60 | 10 | 20 | 30 |
| | | Thickness | (μm) | 20 | 20 | 20 | 20 | 20 | 20 |
| | Inner layer (X) | Component (A) | Type | PP (A-4) | PP (A-4) | PP (A-4) | PP (A-4) | PP (A-4) | PP (A-4) |
| | | | Ratio (wt%) | 55 | 55 | 55 | 55 | 55 | 55 |
| | | Component (B) | Type | PE (B-1) | PE (B-1) | PE (B-1) | PE (B-1) | PE (B-1) | PE (B-1) |
| | | | Ratio (wt%) | 20 | 20 | 20 | 20 | 20 | 20 |
| | | Component (C) | Type | PP (C-2) | PP (C-2) | PP (C-2) | PP (C-2) | PP (C-2) | PP (C-2) |
| | | | Ratio (wt%) | 25 | 25 | 25 | 25 | 25 | 25 |
| | | Other components | Type | -- | -- | -- | -- | -- | -- |
| | | | Ratio (wt%) | -- | -- | -- | -- | -- | -- |
| | | Thickness (μm) | | 160 | 160 | 160 | 160 | 160 | 160 |
| | Innermost layer (Z) | Type | | Z-3 | Z-3 | Z-3 | Z-3 | Z-3 | Z-3 |
| | | Thickness (μm) | | 20 | 20 | 20 | 20 | 20 | 20 |
| | Total thickness (μm) | | | 200 | 200 | 200 | 200 | 200 | 200 |
| Film properties after heat treatment | Heat resistance | | | good | good | good | good | good | good |
| | Internal haze (%) | | | 4.2 | 4.2 | 4.5 | 3.7 | 3.7 | 3.5 |
| | Tensile modulus (MPa) | | | 310 | 300 | 320 | 320 | 300 | 280 |
| | Impact strength (KJ/m) | | | 8 | 10 | 9 | 5 | 6 | 10 |
| Fabricability | Shape-holding temperature (°C) | | | 155 | 155 | 155 | 155 | 155 | 155 |

Table 13

| Layer structure and formulations | | | | | Examples | | | | | | |
|---|---|---|---|---|---|---|---|---|---|---|---|
| | | | | | 31 | 32 | 33 | 34 | 35 | 36 | 37 |
| | Outer layer (Y) | Component (D) | Type | | PP (D-2) | PP (D-2) | PP (D-2) | PP (D-2) | PP (D-2) | PP (D-2) | PP (D-2) |
| | | | Ratio (wt%) | | 60 | 60 | 60 | 60 | 60 | 60 | 60 |
| | | Component (D3) | Type | | PE(D3-1) | PE(D3-1) | PE(D3-1) | PE(D3-1) | PE(D3-1) | PE(D3-1) | PE(D3-1) |
| | | | Ratio (wt%) | | 10 | 10 | 10 | 10 | 10 | 10 | 10 |
| | | Other components | Type | | PP (D-1) | PP (D-1) | PP (D-1) | PP (D-1) | PP (D-1) | PP (D-1) | PP (D-1) |
| | | | Ratio (wt%) | | 30 | 30 | 30 | 30 | 30 | 30 | 30 |
| | | Thickness ($\mu$m) | | | 20 | 20 | 20 | 20 | 20 | 20 | 20 |
| | Inner layer (X) | Component (A) | Type | | PP (A-4) | PP (A-4) | PP (A-4) | PP (A-4) | PP (A-4) | PP (A-4) | PP (A-9) |
| | | | Ratio (wt%) | | 55 | 55 | 55 | 55 | 55 | 55 | 55 |
| | | Component (B) | Type | | PE (B-1) | PE (B-1) | PE (B-1) | PE (B-1) | PE (B-1) | PE (B-1) | PE (B-1) |
| | | | Ratio (wt%) | | 20 | 20 | 20 | 20 | 20 | 20 | 20 |
| | | Component (C) | Type | | PP (C-2) | PP (C-2) | PP (C-2) | PP (C-2) | PP (C-2) | PP (C-2) | PP (C-2) |
| | | | Ratio (wt%) | | 25 | 25 | 25 | 25 | 25 | 25 | 25 |
| | | Other components | Type | | -- | -- | -- | -- | -- | -- | -- |
| | | | Ratio (wt%) | | -- | -- | -- | -- | -- | -- | -- |
| | | Thickness ($\mu$m) | | | 160 | 160 | 160 | 160 | 160 | 160 | 160 |
| | Innermost layer (Z) | Type | | | Z-4 | Z-5 | Z-6 | Z-7 | Z-8 | Z-9 | Z-9 |
| | | Thickness ($\mu$m) | | | 20 | 20 | 20 | 20 | 20 | 20 | 20 |
| | Total thickness ($\mu$m) | | | | 200 | 200 | 200 | 200 | 200 | 200 | 200 |

(continued)

| | | Examples | | | | | | |
|---|---|---|---|---|---|---|---|---|
| | | 31 | 32 | 33 | 34 | 35 | 36 | 37 |
| Film properties after heat treatment | Heat resistance | good | good | good | good | good | good | good |
| | Internal haze (%) | 4 | 4.3 | 4.1 | 4.1 | 3.8 | 4.3 | 4.1 |
| | Tensile modulus (MPa) | 340 | 330 | 290 | 300 | 290 | 290 | 350 |
| | Impact strength (KJ/m) | 8 | 7 | 10 | 8 | 9 | 9 | 10 |
| Fabricability | Shape-holding temperature (°C) | 155 | 155 | 155 | 155 | 155 | 155 | 155 |

Comparative Examples 1 to 2

Aside from using the ingredients mentioned in Table 14 below, laminated sheets were obtained in the same way as in Example 1.

Evaluation results are shown in Table 14 below.

Comparative Examples 3 to 7

Aside from using the ingredients mentioned in Table 14 below, laminated sheets were obtained in the same way as in Examples 2 to 37. Evaluation results are shown in Table 14 below.

Table 14

| Layer structure and formulations | | | | Comparative Examples | | | | | | |
|---|---|---|---|---|---|---|---|---|---|---|
| | | | | 1 | 2 | 3 | 4 | 5 | 6 | 7 |
| | Outer layer (Y) | Component (D) | Type | D1 | D1 | D1 | D1 | D1 | D1 | PP (D-2) |
| | | | Ratio (wt%) | 100 | 100 | 100 | 100 | 100 | 100 | 60 |
| | | Component (D3) | Type | | | | | | | PE (D3-1) |
| | | | Ratio (wt%) | | | | | | | 10 |
| | | Other components | Type | | | | | | | PP (D-1) |
| | | | Ratio (wt%) | | | | | | | 30 |
| | | Thickness ($\mu$m) | | 20 | 20 | 20 | 20 | 20 | 20 | 20 |
| | Inner layer (X) | Component (A) | Type | PP (A-1) | PP (A-3) | PP (A-7) | PP (A-8) | PP (A-4) | PP (A-4) | PP (A-1) |
| | | | Ratio (wt%) | 65 | 65 | 65 | 65 | 65 | 65 | 55 |
| | | Component (B) | Type | PE (B-1) | PE (B-1) | PE (B-1) | PE (B-1) | PE (B-7) | PE (B-8) | PE (B-3) |
| | | | Ratio (wt%) | 30 | 30 | 30 | 30 | 30 | 30 | 20 |
| | | Component (C) | Type | PP (C-1) | PP (C-1) | PP (C-1) | PP (C-1) | PP (C-1) | PP (C-1) | PP (C-2) |
| | | | Ratio (wt%) | 5 | 5 | 5 | 5 | 5 | 5 | 25 |
| | | Other components | Type | | | | | | | |
| | | | Ratio (wt%) | | | | | | | |
| | | Thickness ($\mu$m) | | 160 | 160 | 160 | 160 | 160 | 160 | 160 |

EP 2 617 765 B1

43

| | | | Comparative Examples | | | | | | |
|---|---|---|---|---|---|---|---|---|---|
| | | | 1 | 2 | 3 | 4 | 5 | 6 | 7 |
| | Innermost layer (Z) | Type | Z-1 | Z-1 | Z-1 | Z-1 | Z-1 | Z-1 | Z-3 |
| | | Thickness ($\mu$m) | | | | | | | 20 |
| | Total thickness ($\mu$m) | | 200 | 200 | 200 | 200 | 200 | 200 | 200 |
| Film properties after heat treatment | Heat resistance | | good | good | good | good | good | good sample not obtained due to film thickness instability | good |
| | Internal haze (%) | | 3.2 | 12 | 11 | 3.5 | 12 | | 1.8 |
| | Tensile modulus (MPa) | | 267 | 371 | 285 | 270 | 310 | | 330 |
| | Impact strength (KJ/m) | | 3 | 9 | 7 | 3 | 3 | | 4 |
| Fabricability | Shape-holding temperature (°C) | | 145 | 145 | 145 | 145 | 145 | | 155 |

EP 2 617 765 B1

In Comparative Examples 1, 4 and 7, the pressed sheet in component (A) had a single peak on the tan δ peak curve, as a result of which the impact resistance at very low temperature was poor. In Comparative Examples 2 and 3, the water-cooled blown-film extruded sheet in component (A) had a non-single peak on the tan δ curve, as a result of which the transparency was poor. In Comparative Example 5, the density of component (B) was too high, as a result of which the impact resistance at very low temperature was poor. In Comparative Example 6, the MFR of component (B) was too high, as a result of which the sheet formability was poor and film thickness variations arose, making it impossible to obtain good samples.

INDUSTRIAL APPLICABILITY

The propylene resin sheets of the invention are propylene resin sheets having an excellent flexibility, transparency, heat resistance and low-temperature impact resistance. Heat-treatable packaging bags obtained using such sheets are highly useful for IV infusion bag and pascalization packaging bag applications.

**Claims**

1. A propylene resin sheet having at least one layer made of a propylene resin composition (X) composed of:

   50 to 90 wt % of a propylene resin composition (A) which satisfies conditions under which

   (A-i) 30 to 70 wt% of a propylene-$\alpha$-olefin random copolymer component (A1) having a melting peak temperature (Tm (A1)) of from 120 to 150°C, and 70 to 30 wt% of a propylene-$\alpha$-olefin random copolymer component (A2) having a $C_2$ and/or $C_{4-8}$ $\alpha$-olefin content ($\alpha$ [A2]) of at least 10 wt% but less than 20 wt% are contained,
   (A-ii) a melt flow rate (MFR (A), at 230°C and 2.16 kg) is in the range of from 0.5 to 20 g/10 min,
   (A-iii) in a temperature-loss tangent (tan δ, measured for a 200 $\mu$m thick sheet obtained by water-cooled blown-film extrusion) curve obtained by dynamic mechanical analysis (DMA), the tan $\delta$ curve peaks representing glass transitions observed in the range of -60°C to 20°C exhibit a single peak at or below 0°C, and
   (A-iv) in a temperature-loss tangent (tan $\delta$, measured for a 2 mm thick sheet obtained by press molding) curve obtained by dynamic mechanical analysis (DMA), the tan $\delta$ curve peak representing glass transitions observed in the range of -60°C to 20°C exhibit a non-single peak at or below 0°C; and

   10 to 50 wt % of an ethylene-$\alpha$-olefin copolymer (B) which satisfies conditions under which

   (B-i) a density is in the range of from 0.860 to 0.910 g/cm$^3$, and
   (B-ii) a melt flow rate (MFR (B), at 190°C and 2.16 kg) is from 0.1 to 20 g/10 min.

2. The propylene resin sheet according to claim 1, comprising at least two layers including, as an inner layer (1), the layer composed of the propylene resin composition (X) according to claim 1, and further including an outer layer (2), wherein when a total thickness of the sheet is defined as 100, the inner layer (1) accounts for 50 to 98 of the total thickness.

3. The propylene resin sheet according to claim 1 or 2, wherein the propylene resin composition (A) is obtained using a metallocene catalyst.

4. The propylene resin sheet according to any one of claims 1 to 3, wherein the propylene-$\alpha$-olefin random copolymer component (A1) and the propylene-$\alpha$-olefin random copolymer component (A2) of the propylene resin composition (A) are obtained by successive polymerization including, in order:

   a first step of polymerizing from 30 to 70 wt% of the propylene-$\alpha$-olefin random copolymer component (A1), and
   a second step of polymerizing from 70 to 30 wt% of the propylene-$\alpha$-olefin random copolymer component (A2) having an $\alpha$-olefin content ($\alpha$ [A2]) of at least 10 wt% but less than 20 wt%.

5. The propylene resin sheet according to any one of claims 1 to 3, wherein the propylene-$\alpha$-olefin random copolymer component (A1) and the propylene-$\alpha$-olefin random copolymer component (A2) of the propylene resin composition (A) are obtained by successive polymerization including, in order:

a fist step of polymerizing from 30 to 70 wt% of the propylene-$\alpha$-olefin random copolymer component (A1), and a second step of polymerizing from 70 to 30 wt% of the propylene-$\alpha$-olefin random copolymer component (A2) having an $\alpha$-olefin content ($\alpha$ [A2]) of at least 13 wt% but less than 16 wt%.

6. The propylene resin sheet according to any one of claims 1 to 5, wherein the propylene resin composition (X) making up the inner layer (1) further comprises, per 100 parts by weight of the propylene resin composition (X), 1 to 100 parts by weight of a propylene resin (C) which satisfies conditions of

   (C-i) having a melting peak temperature (Tm (C)) of more than 150°C and up to 170°C, and
   (C-ii) having a melt flow rate (MFR (C), at 230°C and 2.16 kg) in the range of from 0.5 to 30 g/10 min.

7. The polypropylene resin sheet according to any one of claims 1 to 6, further comprising an innermost layer (3), with the polypropylene resin sheet being formed of at least three layers in the order: outer layer (2), inner layer (1), innermost layer (3).

8. The propylene resin sheet according to any one of claims 1 to 7, wherein a propylene resin composition (Y) making up the outer layer (2) comprises a propylene resin (D) having a melting peak temperature (Tm (D)) in the range of 150 to 170°C.

9. The polypropylene resin sheet according to any one of claims 1 to 8, wherein the propylene-$\alpha$-olefin random copolymer (A2) in the propylene resin composition (A) is a propylene-ethylene random copolymer.

10. The polypropylene resin sheet according to any one of claims 1 to 9, wherein the propylene-$\alpha$-olefin random copolymer (A1) in the propylene resin composition (A) is a propylene-ethylene random copolymer.

11. The propylene resin sheet according to any one of claims 1 to 10, which has a thickness of from 0.01 to 1.0 mm.

12. A heat-treatable packaging material which uses the propylene resin sheet according to any one of claims 1 to 11.

13. The heat-treatable packaging material according to claim 12, which is an intravenous injection (IV) infusion bag.


**Patentansprüche**

1. Propylenharzfolie mit mindestens einer Schicht aus einer Propylenharzzusammensetzung (X), die besteht aus:

   50 bis 90 Gew.% einer Propylenharzzusammensetzung (A), die Bedingungen erfüllt, unter denen

   (A-i) 30 bis 70 Gew.% eines statistischen Propylen-$\alpha$-Olefin-Copolymerbestandteils (A1) mit einer Schmelzpeaktemperatur (Tm (A1)) von 120 bis 150°C und 70 bis 30 Gew.% eines statistischen Propylen-$\alpha$-Olefin-Copolymerbestandteils (A2) mit einem $C_2$- und/oder $C_{4-8}$-$\alpha$-Olefingehalt ($\alpha$ [A2]) von mindestens 10 Gew.%, jedoch weniger als 20 Gew.%, enthalten sind,
   (A-ii) die Schmelzflussrate (MFR (A) bei 230°C und 2,16 kg) im Bereich von 0,5 bis 20 g/10 Minuten liegt,
   (A-iii) in einer Temperaturverlust-Tangens-Kurve (tan $\delta$, gemessen für eine 200 $\mu$m dicke Folie, die durch wassergekühlte Blasfolienextrusion erhalten wird), die durch dynamisch-mechanische Analyse (DMA) erhalten wird, die tan $\delta$-Kurvenpeaks, die Glasübergänge, welche im Bereich von -60°C bis 20°C beobachtet werden, darstellen, einen einzelnen Peak bei 0°C oder weniger aufweisen und
   (A-iv) in einer Temperaturverlust-Tangens-Kurve (tan $\delta$, gemessen für eine 2 mm dicke Folie, die durch Pressformgebung erhalten wird), die durch dynamisch-mechanische Analyse (DMA) erhalten wird, der tan $\delta$-Kurvenpeak, der Glasübergänge, die im Bereich von -60°C bis 20°C beobachtet werden, darstellt, keinen einzelnen Peak bei 0°C oder weniger aufweist; und

   10 bis 50 Gew.% eines Ethylen-$\alpha$-Olefin-Copolymers (B) das Bedingungen erfüllt, unter denen

   (B-i) die Dichte im Bereich von 0,860 bis 0,910 g/cm$^3$ liegt und
   (B-ii) die Schmelzflussrate (MFR (B), bei 190°C und 2,16 kg) 0,1 bis 20 g/10 Minuten beträgt.

2. Propylenharzfolie gemäß Anspruch 1, die zumindest zwei Schichten umfasst, welche die Schicht aus der Propylenharzzusammensetzung (X) gemäß Anspruch 1 als eine Innenschicht (1) beinhalten und ferner eine Außenschicht (2) beinhalten, wobei, wenn die Gesamtdicke der Folie als 100 definiert wird, die Innenschicht (1) 50 bis 98 der Gesamtdicke ausmacht.

3. Propylenharzfolie gemäß Anspruch 1 oder 2, wobei die Propylenharzzusammensetzung (A) unter Verwendung eines Metallocenkatalysators erhalten wird.

4. Propylenharzfolie gemäß einem der Ansprüche 1 bis 3, wobei der statistische Propylen-$\alpha$-Olefin-Copolymerbestandteil (A1) und der statistische Propylen-$\alpha$-Olefin-Copolymerbestandteil (A2) der Propylenharzzusammensetzung (A) durch aufeinanderfolgende Polymerisation erhalten werden, die der Reihe nach einschließt:

einen ersten Polymerisationsschritt von 30 bis 70 Gew.% des statistischen Propylen-$\alpha$-Olefin-Copolymerbestandteils (A1) und
einen zweiten Polymerisationsschritt von 70 bis 30 Gew.% des statistischen Propylen-$\alpha$-Olefin-Copolymerbestandteils (A2) mit einem $\alpha$-Olefingehalt ($\alpha$ [A2]) von mindestens 10 Gew.%, jedoch weniger als 20 Gew.%.

5. Propylenharzfolie gemäß einem der Ansprüche 1 bis 3, wobei der statistische Propylen-$\alpha$-Olefin-Copolymerbestandteil (A1) und der statistische Propylen-$\alpha$-Olefin-Copolymerbestandteil (A2) der Propylenharzzusammensetzung (A) durch aufeinanderfolgende Polymerisation erhalten werden, die der Reihe nach einschließt:

einen ersten Polymerisationsschritt von 30 bis 70 Gew.% des statistischen Propylen-$\alpha$-Olefin-Copolymerbestandteils (A1) und
einen zweiten Polymerisationsschritt von 70 bis 30 Gew.% des statistischen Propylen-$\alpha$-Olefin-Copolymerbestandteils (A2) mit einem $\alpha$-Olefingehalt ($\alpha$ [A2]) von mindestens 13 Gew.%, jedoch weniger als 16 Gew.%.

6. Propylenharzfolie gemäß einem der Ansprüche 1 bis 5, wobei die Propylenharzzusammensetzung (X), die die Innenschicht (1) ausmacht, ferner pro 100 Gew.-Teile der Propylenharzzusammensetzung (X) 1 bis 100 Gew.-Teile eines Propylenharzes (C) umfasst, das die Bedingungen erfüllt

(C-i) Schmelzpeaktemperatur (Tm (C)) von mehr als 150°C und bis zu 170°C und
(C-ii) Schmelzflussrate (MFR (C), bei 230°C und 2,16 kg) im Bereich von 0,5 bis 30 g/10 Minuten.

7. Polypropylenharzfolie gemäß einem der Ansprüche 1 bis 6, die ferner eine innerste Schicht (3) umfasst, wobei die Polypropylenharzfolie aus mindestens drei Schichten in der Reihenfolge: Außenschicht (2), Innenschicht (1), innerste Schicht (3) gebildet ist.

8. Propylenharzfolie gemäß einem der Ansprüche 1 bis 7, wobei die Propylenharzzusammensetzung (Y), die die Außenschicht (2) ausmacht, ein Propylenharz (D) mit einer Schmelzpeaktemperatur (Tm (D)) im Bereich von 150 bis 170°C umfasst.

9. Propylenharzfolie gemäß einem der Ansprüche 1 bis 8, wobei das statistische Propylen-$\alpha$-Olefin-Copolymer (A2) in der Propylenharzzusammensetzung (A) ein statistisches Propylen-Ethylen-Copolymer ist.

10. Propylenharzfolie gemäß einem der Ansprüche 1 bis 9, wobei das statistische Propylen-$\alpha$-Olefin-Copolymer (A1) in der Propylenharzzusammensetzung (A) ein statistisches Propylen-Ethylen-Copolymer ist.

11. Propylenharzfolie gemäß einem der Ansprüche 1 bis 10, die eine Dicke von 0,01 bis 1,0 mm aufweist.

12. Wärmebehandelbares Verpackungsmaterial, welches die Propylenharzfolie gemäß einem der Ansprüche 1 bis 11 verwendet.

13. Wärmebehandelbares Verpackungsmaterial gemäß Anspruch 12, welches ein intravenöser Injektions(IV)-Infusionsbeutel ist.

**Revendications**

1. Feuille de résine de propylène ayant au moins une couche réalisée en une composition de résine de propylène (X) composée de :

50 à 90% en poids d'une composition de résine de propylène (A) qui satisfait des conditions dans lesquelles

(A-i) 30 à 70% en poids d'un composant copolymère aléatoire de propylène-$\alpha$-oléfine (A1) ayant une température de pic de fusion (Tm (A1)) allant de 120 à 150 °C, et 70 à 30% en poids d'un composant copolymère aléatoire de propylène-$\alpha$-oléfine (A2) ayant une teneur en $\alpha$-oléfine en $C_2$ et/ou en $C_4$ à $C_8$ ($\alpha$ [A2]) d'au moins 10% en poids mais de moins de 20% en poids sont contenus,
(A-ii) un indice de fluidité (MFR (A), à 230°C et 2,16 kg) se trouve dans la plage allant de 0,5 à 20 g/10 min,
(A-iii) dans une courbe de température-tangente de l'angle de pertes (tan $\delta$, mesurée pour une feuille de 200 $\mu$m d'épaisseur obtenue par extrusion de film soufflé refroidi à l'eau) obtenue par analyse mécanique dynamique (DMA), les pics de la courbe tan $\delta$ représentant des transitions vitreuses observées dans la plage allant de - 60°C à 20°C présentent un pic unique à une température inférieure ou égale à 0°C, et
(A-iv) dans une courbe de température-tangente de l'angle de pertes (tan $\delta$, mesurée pour une feuille de 2 mm d'épaisseur obtenue par moulage à la presse) obtenue par analyse mécanique dynamique (DMA), les pics de la courbe tan $\delta$ représentant des transitions vitreuses observées dans la plage allant de -60°C à 20°C présentent un pic non unique à une température inférieure ou égale à 0°C ; et

10 à 50% en poids d'un copolymère d'éthylène-$\alpha$-oléfine (B) qui satisfait des conditions dans lesquelles

(B-i) une densité se trouve dans la plage allant de 0,860 à 0,910 g/cm$^3$, et
(B-ii) un indice de fluidité (MFR (B), à 190°C et 2,16 kg) est de 0,1 à 20 g/10 min.

2. Feuille de résine de propylène selon la revendication 1, comprenant au moins deux couches comportant, en tant que couche interne (1), la couche composée de la composition de résine de propylène (X) selon la revendication 1, et comportant en outre une couche externe (2), où, lorsqu'une épaisseur totale de la feuille est définie comme étant 100, la couche interne (1) représente 50 à 98 de l'épaisseur totale.

3. Feuille de résine de propylène selon la revendication 1 ou 2, dans laquelle la composition de résine de propylène (A) est obtenue en utilisant un catalyseur à base de métallocène.

4. Feuille de résine de propylène selon l'une quelconque des revendications 1 à 3, dans laquelle le composant copolymère aléatoire de propylène-$\alpha$-oléfine (A1) et le composant copolymère aléatoire de propylène-$\alpha$-oléfine (A2) de la composition de résine de propylène (A) sont obtenus par polymérisation successive comportant, dans l'ordre :

une première étape de polymérisation de 30 à 70% en poids du composant copolymère aléatoire de propylène-$\alpha$-oléfine (A1), et
une deuxième étape de polymérisation de 70 à 30% en poids du composant copolymère aléatoire de propylène-$\alpha$-oléfine (A2) ayant une teneur en $\alpha$-oléfine ($\alpha$ [A2]) d'au moins 10% en poids mais de moins de 20% en poids.

5. Feuille de résine de propylène selon l'une quelconque des revendications 1 à 3, dans laquelle le composant copolymère aléatoire de propylène-$\alpha$-oléfine (A1) et le composant copolymère aléatoire de propylène-$\alpha$-oléfine (A2) de la composition de résine de propylène (A) sont obtenus par polymérisation successive comportant, dans l'ordre :

une première étape de polymérisation de 30 à 70% en poids du composant copolymère aléatoire de propylène-$\alpha$-oléfine (A1), et
une deuxième étape de polymérisation de 70 à 30% en poids du composant copolymère aléatoire de propylène-$\alpha$-oléfine (A2) ayant une teneur en $\alpha$-oléfine ($\alpha$ [A2]) d'au moins 13% en poids mais de moins de 16% en poids.

6. Feuille de résine de propylène selon l'une quelconque des revendications 1 à 5, dans laquelle la composition de résine de propylène (X) constituant la couche interne (1) comprend en outre, pour 100 parties en poids de la composition de résine de propylène (X), 1 à 100 parties en poids d'une résine de propylène (C) qui satisfait les conditions suivantes

(C-i) ayant une température de pic de fusion (Tm (C)) supérieure à 150°C et allant jusqu'à 170°C, et
(C-ii) ayant un indice de fluidité (MFR (C), à 230°C et 2,16 kg) se trouvant dans la plage allant de 0,5 à 30 g/10 min,

7. Feuille de résine de polypropylène selon l'une quelconque des revendications 1 à 6, comprenant en outre une couche la plus interne (3), avec la feuille de résine de polypropylène formée d'au moins trois couches dans l'ordre suivant : une couche externe (2), une couche interne (1), une couche la plus interne (3).

8. Feuille de résine de propylène selon l'une quelconque des revendications 1 à 7, dans laquelle une composition de résine de propylène (Y) constituant la couche externe (2) comprend une résine de propylène (D) ayant une température de pic de fusion (Tm (D)) se trouvant dans la plage allant de 150 à 170°C.

9. Feuille de résine de polypropylène selon l'une quelconque des revendications 1 à 8, dans laquelle le copolymère aléatoire de propylène-$\alpha$-oléfine (A2) dans la composition de résine de propylène (A) est un copolymère aléatoire de propylène-éthylène.

10. Feuille de résine de polypropylène selon l'une quelconque des revendications 1 à 9, dans laquelle le copolymère aléatoire de propylène-$\alpha$-oléfine (A1) dans la composition de résine de propylène (A) est un copolymère aléatoire de propylène-éthylène.

11. Feuille de résine de propylène selon l'une quelconque des revendications 1 à 10, qui a une épaisseur allant de 0,01 à 1,0 mm.

12. Matériau d'emballage pouvant être traité à la chaleur qui utilise la feuille de résine de propylène selon l'une quelconque des revendications 1 à 11.

13. Matériau d'emballage pouvant être traité à la chaleur selon la revendication 12, qui est une poche de perfusion pour injection intraveineuse (IV).

FIG.1

FIG.2

FIG.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H9308682 B
- JP H999036 B
- JP H975444 B
- JP H9324022 B
- JP 2006307072 A
- JP 2008524391 W
- JP 2007245490 A
- JP 2010138211 A
- JP 2005132979 A
- JP S5819309 B
- JP S5995292 B
- JP S6035006 B
- JP H3163088 B
- JP 2006035516 A
- JP 2001172454 A
- JP H7508545 W
- JP 4389307 B

### Non-patent literature cited in the description

- **G. GLOCKNER.** *J. Appl. Polym. Sci.: Appl. Polym, Symp.,* 1990, vol. 45, 1-24
- **L. WILD.** *Adv. Polym. Sci,* 1990, vol. 98, 1-47
- **J.B.P. SOARES ; A.E. HAMIELEC.** *Polymer,* 1995, vol. 36 (8), 1639-1654
- *Macromolecules,* 1988, vol. 21, 314-319
- *Macromolecules,* 1984, vol. 17, 1950
- **CARMAN et al.** *Macromolecules,* 1977, vol. 10, 536
- *Macromolecules,* 1982, vol. 15, 1150